# EUROPEAN PATENT APPLICATION

(11) **EP 1 225 534 A1**
(43) Date of publication of application: **24.07.2002**
(21) Application number: 99974112.7
(22) Date of filing: 07.10.1999
(51) Int. Cl.: G06F 19/00, G06F 17/60

(54) **IC CARD DEALING SYSTEM**

(71) Applicant: FUJITSU LIMITED, Kawasaki-shi, Kanagawa 211-8588 (JP)
(72) Inventor: HOSHINO, Masao, c/o Fujitsu Limited, Kawasaki-shi, Kanagawa 211-8588 (JP); NISHIO, Nobuhiko, c/o Fujitsu Limited, Kawasaki-shi, Kanagawa 211-8588 (JP)
(74) Representative: Joly, Jean-Jacques
(86) International application number: JP9905562
(87) International publication number: WO0127853

(57) **Abstract**

An IC card transaction system, electronic wallet transaction equipment and an IC card introduce a service function to electronic wallet transaction. Electronic wallet transaction equipment (1) includes a function (5) for issuing a service ticket to an IC card (2), as well as a function (5) for extracting and collecting the service ticket being an object of the service provision from the IC card (2). The issued service ticket is transferable between IC card (2) and equipment (1), enabling to provide a service having circulation capability to the electronic wallet transaction.

## Description

### TECHNICAL FIELD

The present invention relates to an IC card transaction system, and electronic wallet transaction apparatus and an IC card therefor, and more particularly an IC card transaction system and electronic wallet transaction apparatus and an IC card therefor for enabling customer services applicable to electronic wallet transaction.

### BACKGROUND ART

Recently, electronic commerce using an IC card, which is referred to as electronic wallet transaction, becomes in practical use. This electronic wallet transaction system is constituted in such a manner that cash data corresponding to money is provided in a customer's IC card and the cash data is transferred to transaction equipment. The IC card for electronic wallet transaction is constituted by a one-chip microcomputer that includes a nonvolatile RAM and a processor. The microcomputer is structured in a plastic card having the same size as a credit card with increased security.

In the nonvolatile RAM, there are stored an amount of money and a personal identification number (PIN). Further, program modules for encryption processing and decryption processing are stored in the nonvolatile RAM. Also, an authentication program is incorporated in the nonvolatile RAM aiming to authenticate the equipment for accessing the IC card and the person who accesses the IC card by utilizing these equipment by running these program modules. Thereby, the security is increased. IC card is advantageous to security when compared to a magnetic card which is vulnerable to falsification or illegal readout of recorded data.

In a method of electronic wallet transaction an electronic means substitutes for a traditional procedure of payment to the opposite party by handing over cash out of a wallet. According to electronic wallet transaction, when portion of money recorded in an IC card is electronically transferred to transaction equipment, balance in the IC card is decreased for the amount paid, while the balance being maintained in a transaction equipment memory is increased for that amount.

Such electronic wallet transaction brings about convenience for shoppers, making it unnecessary to prepare cash for shopping or the like. This reduces transaction time compared to the case of conventional cash payment, and also releases each shopper from carrying a bulky wallet filled with a lot of small changes or bills. Further, in case a large amount of money must be handled in a shop, a bank, etc., electronic money produces higher security against robbery or the like which may possibly occur during carrying cash, because cash is handled.

On the other hand, IC card has not so much advantage on the way of use for its higher price as compared to a credit card formed of magnetic card. This impedes IC card to become popular in use. Namely, for each shopper an electronic wallet transaction is almost identical to a transaction by a credit card in respect of no need of cash payment. Only the difference at the moment is that electronic money transfer in electronic wallet transaction is carried out on the spot in real time, while in credit card transaction electronic money is transferred at a later date from the credit card owner to the other side. These are of little difference in the way of use from a customer's point of view.

To promote electronic wallet transaction using an IC card, a combined method of the electronic wallet transaction and a customer service system may be considered. As an example, there has been proposed, in the official gazette of Japanese Unexamined Patent Publication No. Hei-7-334590, an electronic wallet transaction system combined with a point card service of coupon.

In the above-mentioned proposal, transaction history and service program are written into an electronic wallet (electronic bankbook) from a POS terminal at the time of the transaction. This service program is performed in an ATM (automatic teller machine) to calculate a service point from the transaction history of the electronic wallet and to obtain an amount to be converted into money. This conversion amount is then automatically transferred to the account of the electronic wallet owner.

However, in this system, the service has a close connection with the transaction history and therefore it is not possible to transfer the service to the other person. Therefore, there is a problem that it is not possible to provide circulating capability that has been provided in a service ticket conventionally provided in the form of piece of paper such as a coupon ticket and a lottery.

Also, conversion service to cash cannot be received until a user goes to a place where an ATM is installed, not at the place where the transaction is made using a POS terminal, etc. As it is not possible to receive the service at the time of electronic wallet transaction, a problem occurs of bringing about inconvenience to users.

There is disclosed another customer service system of a lottery system using a prepaid card in the Japanese Unexamined Patent Publication No. Hei-9-218901. In this system, each shop issues a member card. A magnetic card is used for this member card, on which an IC chip is mounted. On the magnetic stripe thereupon a member identification number is recorded. A service is conducted in the following manner. A lottery number is memorized on the IC chip of the card when the member is subscribed or makes a transaction more than a certain amount. When the campaign period is over, the promoter announces a winning number. For a person who visits a shop during a predetermined exchange period, the own member card is read by a card reader/writer connected to a POS register. The lottery number stored in the IC memory chip is compared to the winning number and it is decided whether the lottery wins or loses to exchange with a commodity when the lottery wins.

However, in this system, only a member to whom a lottery is issued can utilize the lottery, in other words the lottery service cannot be transferred to other persons. Therefore there is a problem that the system cannot provide circulation capability that is conventionally provided by a service ticket such as a coupon ticket, a lottery, etc. in the form of piece of paper.

Focusing on a customer service having no relations with a transaction using a card, there is a known method of a coupon service in the United States of America. In this service, a coupon ticket is printed on a newspaper, advertisement, etc. in the form of machine-readable information such as a barcode, etc. to distribute to customers. When a customer hands over the coupon ticket to a shop clerk when purchasing the related commodity, the shop clerk at the register reads in the coupon ticket with a barcode reader or the like to perform discount service on the related commodity. On the shop side, these coupon tickets are mailed to a totaling center together with a journal in which data are collected. In the totaling center, the coupon tickets are sorted on the basis of each shop and each manufacturer, and the amounts of which each manufacturer has to pay to each shop is calculated and totaled. Thereafter the amount is informed by mail to each manufacturer together with the related coupon tickets.

In this system, each commodity manufacturer can achieve large sales promotion effect, and at the same time customers can enjoy high serviceability. Further cost burden by each sales shop is relatively low. For such reasons this method is popular particularly in the United States of America.

However, in this service system, each coupon ticket is handled by actual pieces of paper, therefore data input is a large lord and it may possibly produce operational mistake. There is another problem that this method is vulnerable to illegal conducts by a personnel in charge, such as intentional padding of the number of coupon tickets, forgery of totaled data, etc. during ticket processing.

Accordingly, it is an object of the present invention to provide an IC card transaction system, electronic wallet transaction apparatus and an IC card applicable to electronic wallet transaction system for being enables to provide a suitable customer service.

It is another object of the present invention to provide an IC card transaction system, electronic wallet transaction apparatus and an IC card for being enables to transfer a service independently.

It is still another object of the present invention to provide an IC card transaction system, electronic wallet transaction apparatus and an IC card for reflecting a customer service directly to an electronic wallet transaction.

It is still another object of the present invention to provide an IC card transaction system, electronic wallet transaction apparatus and an IC card therefor enabling to provide a highly secured customer service even when transferable service is introduced, using an IC card having a high security function.

### DISCLOSURE OF THE INVENTION

According to one embodiment of the present invention, in an electronic wallet transaction apparatus or an IC card transaction system for performing electronic wallet transaction in connection with an IC card, electronic wallet transaction apparatus has a function of issuing service information for receiving a desired service and transferring to an IC card and a function of extracting and collecting service information of object for providing the service among service information stored in a memory of the IC card.

In this embodiment, electronic service information on a service ticket is transferable, as in the case of a service ticket formed of a piece of paper. In addition, however, service information is transferred between IC cards and electronic wallet transaction equipment in case of electronic wallet transaction. Accordingly it becomes possible to circulate service tickets similar to the case of paper service tickets even the electronic means is applied to the service ticket. This enables to provide a service convenient for customers into an IC card for electronic wallet transaction.

Also, the electronic wallet transaction apparatus generates service information and transfers to an IC card automatically. The electronic wallet transaction apparatus then extracts and collects the service information for a provided service among service information stored in a memory of the IC card. It is possible to issue service tickets automatically, as well as collect service tickets automatically. Therefore, customer service function can be achieved without requiring lord operation in both a customer side and a shop side which introduces a card system. Also, even though service information is independently given, it is possible to protect from illegal conduct of repeated service reception because the service information sets of the entire tickets are collected from the IC card to one place.

Moreover, because the service transfer and extraction are performed by transaction equipment, service tickets can be issued and extracted without allowing illegal conduct. Further, service information is treated in a similar manner to electronic cash, and therefore plurality types of services can be given to a single IC card.

In another embodiment of the present invention, the electronic wallet transaction apparatus generates service information related to an electronic wallet transaction and transfers the service information. Thus a service ticket to be generated in connection with a transaction can be issued. Accordingly electronic wallet transaction becomes more attractive for users and contributes to become more popularly used.

In still another embodiment of the present invention, electronic wallet transaction apparatus reflects a service in an electronic wallet transaction according to the extracted service information. Because the service can be reflected in the electronic wallet transaction, it becomes possible to provide a service beneficial to users directly.

In another embodiment of the present invention, the IC card includes a processor and a memory. Therefore, it is possible to perform a high electronic wallet transaction and a high service processing.

In another embodiment of the present invention, the electronic wallet transaction apparatus has an encryption processing function for encrypting service information to be transferred and also decrypting service information received from the IC card. This enables to encrypt the service information, further enabling to protect from illegal conduct. Though a service ticket is constituted to be individually transferable, this encryption prevents forgery or the like, and thus presenting a service function with an improved security.

In another embodiment of the present invention, the aforementioned encryption processing function is constituted by an encryption processing function for transferring electronic cash with the aforementioned IC card. Because common encryption processing is provided for both electronic cash and service information, it becomes possible to encrypt the service information without providing a particular encryption processing for the service information.

In another embodiment of the present invention, the aforementioned service information is constituted by a service identification data and an encrypted signature information generated according to the service identification information. Accordingly, forgery of the service information can be prevented.

In another embodiment of the present invention, the electronic wallet transaction apparatus extracts service information from the IC card and performs discount processing against the transaction amount of the electronic wallet transaction. Accordingly, discount by coupon tickets or lottery can be reflected in the electronic wallet transaction.

In still another embodiment of the present invention, electronic wallet transaction apparatus includes a second IC card for collecting the service information and a second reader/writer for exchanging information with the second IC card. In this embodiment, it is possible to handle collected service tickets by the second IC card. Therefore management and treatment of service tickets become easier. In addition, because the tickets are collected automatically to the second IC card, which is different from the apparatus, higher security can be attained.

In still another embodiment of the present invention, the aforementioned second IC card includes a processor and a memory, enabling to provide an improved collection function by the second IC card.

In still another embodiment of the present invention, the second IC card has a function of exchanging information with the aforementioned IC card to perform electronic cash transfer as well as the transfer of the service information. In this embodiment, because the second IC card performs the transaction processing of electronic cash and service tickets, management and treatment of electronic cash and service tickets becomes easier. Moreover, illegal conduct on the shop side can be prevented.

In still another embodiment of an IC card according to the present invention, the IC card includes a processor and a nonvolatile rewritable memory. The processor has an electronic wallet transaction function for performing an electronic wallet transaction and a service information management function for storing into the memory the service information provided from the electronic wallet transaction apparatus, and for transferring the service information stored into the memory to the aforementioned electronic wallet transaction apparatus.

Because the IC card is provided with both electronic 5 wallet transaction function and service ticket transfer function, it becomes easy to provide a service function into the IC card having electronic wallet transaction function.

In still another embodiment of the present invention, the processor in the IC card further includes an encryption processing function for both encrypting information and decrypting the encrypted information. The processor decrypts the encrypted electronic cash and the service information from the aforementioned electronic wallet transaction apparatus, and also transfers the encrypted electronic cash and the service information to the electronic wallet transaction apparatus.

Using the encryption processing function provided in the IC card, service information can be encrypted, enabling to protect from illegal conduct such as forgery. In addition, because common encryption processing is provided for both electronic cash encryption and service information encryption, without providing an encryption processing function particularly for service tickets, it is possible to provide services using service tickets with security maintained.

In another embodiment of the present invention, a processor in the IC card further includes an access determination function for determining whether an access from an external is an access of an apparatus being permitted to transfer the service information in the memory, and permitting the transfer. Thus the service information can be protected against an illegal access, enabling to protect from service information forgery, etc.

In still another embodiment of the present invention, the processor in the IC card stores into the memory the service information constituted by a service ticket identification data and an encrypted signature generated based on the above-mentioned identification data. Thus the IC card is protected from forgery of service information.

In still another embodiment of the present invention, the processor in the IC card transfers the service information to an external apparatus being permitted the transfer and permits only reading out the service ticket identification information to an external apparatus not being permitted the transfer.

Accordingly, reading out the ticket identification information among service information is permitted, enabling to improve visual recognition capability on the service information. Further, because the encrypted signature cannot be read out from any equipment except the transfer thereto is permitted, illegal conduct against the service ticket can be prevented.

In another embodiment of the present invention, there is provided an IC card indicator in an IC card transaction system for displaying service information being stored in a memory of an IC card onto a display unit. Accordingly, the service information in the IC card can be confirmed easily.

In still another embodiment of the present invention, there is provided in the IC card transaction system an IC card connection apparatus for transferring the service information in a first customer IC card to a memory in a second customer IC card. Thus service tickets such as coupon tickets can be exchanged between parent and child or between friends, facilitating the circulation of the service ticket.

In still another embodiment of the present invention, there is provided a settlement apparatus in the IC card transaction system for reading out the service information stored in the second IC card of the electronic wallet transaction apparatus and for classifying and settling the aforementioned service information. After receiving the transfer of the service tickets being collected in a plurality of shops through each second IC card, the settlement equipment can settle the amount to be received or paid by each shop. Accordingly, the settlement of the service tickets becomes entirely possible using the second IC card, bringing about improved security against illegality, etc.

### BRIEF DESCRIPTION OF THE DRAWINGS

FIG. 1 shows a system configuration diagram of an embodiment of the present invention.
FIG. 2 shows a block diagram of a POS terminal according to an embodiment of the present invention.
FIG. 3 shows a process flowchart of the POS terminal shown in FIG. 2.
FIG. 4 shows a block diagram of a customer IC card according to an embodiment of the present invention.
FIG. 5 shows an explanation diagram of a memory area of the customer IC card shown in FIG. 4.
FIG. 6 shows an explanation diagram of an access right table in FIG. 5.
FIG. 7 shows a block diagram of a shop IC card according to an embodiment of the present invention.
FIG. 8 shows an explanation diagram of a memory area of the shop IC card shown in FIG. 7.
FIG. 9 shows a process flowchart (part 1) of the shop IC card shown in FIG. 7;
FIG. 10 shows a process flowchart (part 2) of the shop IC card shown in FIG. 7;
FIG. 11 shows a process flowchart (part 3) of the shop IC card shown in FIG. 7;
FIG. 12 shows a process flowchart (part 4) of the shop IC card shown in FIG. 7;
FIG. 13 shows a process flowchart (part 1) of the customer IC card shown in FIG. 4;
FIG. 14 shows a process flowchart (part 2) of the customer IC card shown in FIG. 4;
FIG. 15 shows a process flowchart (part 3) of the customer IC card shown in FIG. 4;
FIG. 16 shows a block diagram of a balance indicator shown in FIG. 1.
FIG. 17 shows a perspective view of the balance indicator shown in FIG. 16.
FIG. 18 shows a block diagram of a connection unit.
FIG. 19 shows a perspective view of a connection unit shown in FIG. 18.
FIG. 20 shows a block diagram of settlement equipment shown in FIG. 1.
FIG. 21 shows a process flowchart (part 1) of the totaling equipment shown in FIG. 20;
FIG. 22 shows a process flowchart (part 2) of the totaling equipment shown in FIG. 20;
FIG. 23 shows a process flowchart (part 3) of the totaling equipment shown in FIG. 20;
FIG. 24 shows an explanation diagram of tables in the totaling equipment shown in FIG. 20.

### PREFERRED EMBODIMENTS OF THE PRESENT INVENTION

Hereinafter the present invention is explained in order of IC card transaction system, IC card, and electronic wallet transaction apparatus.

### · · IC card transaction system · ·

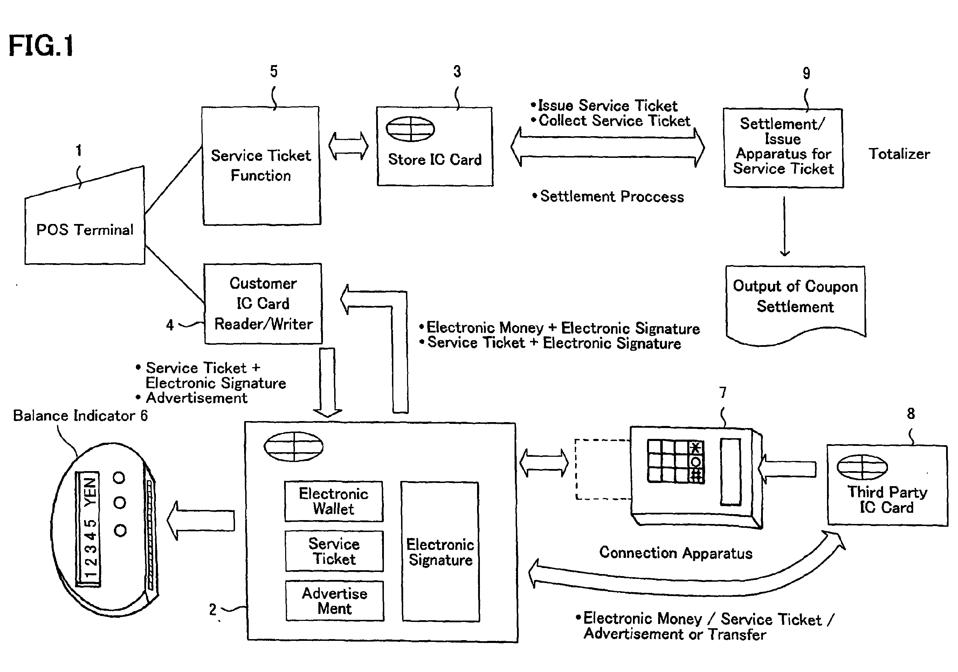

FIG. 1 shows a configuration diagram of an IC card transaction system according to the present invention.

As shown in FIG. 1, a customer IC card 2 comprises a plastic card having size equal to a credit card being standardized by JIS Standard or the like and embedded a processor and a nonvolatile random access memory (RAM). Also, security functions such as encryption and decryption processing are included in the customer IC card 2. However, it is not intended to exclude a magnetic stripe or a stripe for optical recording in this IC card 2. The customer IC card 2 has an electronic wallet area, a service ticket area, an advertising area, and an electronic signature area.

A POS terminal 1 configures electronic wallet transaction equipment that performs the electronic wallet transaction by operating with the customer IC card 2. Here, an electronic wallet is defined as a wallet that possesses cash in the form of electronic value. Here electronic wallet transaction is basically a transaction that performs to transfer the electronic value. In addition, the electronic wallet transaction includes a transaction in which electronic value is transferred in secrecy using encryption and decryption functions and the information related to the value to be transferred is protected from forgery or other illegality using an authentication processing such as so-called electronic signature or the like.

The POS terminal 1 includes customer IC card reader 4 for interchanging information with the customer IC card 2. Further, the POS terminal 1 is provided with a service ticket processing function 5 in addition to the electronic wallet transaction function. The service ticket processing function 5 performs functions of issuing and collecting service tickets, extracting service tickets for each service intended to provide, and executing the related service. Here, the service ticket denotes an electronic ticket to which a value is added for a specific purpose under a certain condition. For example, the electronic ticket corresponds to electronic data of a betting ticket, a lot, and a coupon ticket, and the like, for which pieces of paper are traditionally used.

Now, this system is provided with a shop IC card 3 attachable to the POS terminal 1. This shop IC card 3 consists of hardware having the same configuration as the customer IC card 2. And the shop IC card 3 has functions of issuing service tickets such as a lot, selecting winning tickets, and collecting the winning tickets.

The system is also provided with a management system (management equipment) 9 having settlement equipment. The settlement equipment has a function of reading data from the shop IC card 3 and totaling issued service tickets such as lots, a function of writing issued lots into the shop IC card 3, and a function of performing calculation for settling to an exchange shop.

Electronic cash and service tickets are transferred between the POS terminal 1 and the customer IC card 2. Here, both electronic cash and service tickets include electronic signatures. Here, the transfer denotes the processing that transfers electronic cash or service tickets which are subjects of transfer from one side of an IC card or electronic wallet transaction equipment, to the opposite side. After this transfer, the electronic cash or service tickets that are subjects of the transfer becomes unable to transfer further in the source of the transfer, while the cash or service tickets having been transferred to the received side becomes able to further transfer to other party. For example, when a service ticket is transferred from one side to another, the ticket is made into a state which the transfer source cannot use the related ticket. On the other hand, the side receiving the transfer becomes able to utilize the service ticket of interest. In the transfer source side, the history of the transfer is sometimes recorded therein. The above-mentioned description can also be applied to electronic cash.

In this case, when service tickets (lots, betting tickets, or coupon tickets) are issued onto an IC card, forgery may possibly be made. Introducing encryption technology becomes therefore necessary so that forgery is prevented. This is referred to as an electronic signature. As an example, the encryption technology mentioned below is applied: Taking a lot as an example, an electronic signature data is generated using a number 'A' dedicatedly assigned to a lot issue shop, a number 'B' indicating date of issue, and a number 'C' configuring a portion of a lot number (for example, the last three digits of the lot number).

A transaction history related to the issue of the lot is recorded in IC card. In such a transaction history, there are recorded the date of issue of the lot concerned and the shop number issuing the lot. These information sets are extracted from the IC card and a winning lot confirmation equipment or the like, the last three digits in the lot number is decrypted from data consisting of the date of issue, the shop number issuing the lot, and the electronic signature. The decrypted last three digits in the lot number and the actual last three digits in the lot number are compared to conduct verification.

It is desirable that the shop number is a number as a secret key which is arbitrarily set. In such a case, the POS terminal 1 issuing a lot encrypts the lot using a key number that becomes a key of interest. Further, winning lot confirmation equipment has a key number table storing a key number corresponding to the shop number and read the key number from the table. Thus encryption and decryption are carried out. Otherwise, a lot number to be shown to a customer is restricted to the last three digits, and the upper encrypted digits or a portion thereof is hidden to a customer in the form of digital signature. Any customer cannot fabricate the winning lot because he is unable to know the shop number. Also, a shop clerk being employed by the shop cannot fabricate because he does not know the encryption of the shop. Moreover, it is possible to verify whether or not forgery is committed.

Now, a service processing performed in this system is described hereafter.

In case the service ticket is a betting ticket, selection of betting number is performed. The number of bets is input into the IC card 2 for each betting number. The number of bets is also stored in the IC card 3 of POS terminal 1. In this case, it is difficult in IC card 2 to distinguish whether the betting number relates to same betting period concerned or relates to a different betting period. Therefore, when issuing a betting ticket from the IC card 3 of the POS terminal 1, identification information to be added to a lot number is produced by combining the information on the period concerned with a digital signature. Then the lot number is combined with the identification information and the combination is input to the IC card 2 as a betting number. IC card 3 in POS terminal 1 calculates a total value when settling, etc. After the collection period is over, the lot number obtaining the largest number is determined as a winning number.

When a transaction is made using IC card 2, the IC card 3 of the POS terminal 1 reads the lot number, the number of bets, and the identification information from the IC card 2. Then, the justification of the information concerned is verified from the identification information, and at the same time the collection period is derived. The IC card 3 in the POS terminal 1 has a table including a list of winning number for each collection period (for example, on each two week basis within three months or so, when the collection period is set as every two weeks). By retrieving this table, the winning number can be obtained using the collection period being derived from the identification information. The obtained winning number is compared with the lot number to have been bet to determine whether or not the lot number wins.

In case a service provided for the betting tickets is refunding, when finding matched lot number, total refund amount is calculated by multiplying the number of bets with the refund per betting unit for each winning number being written in the aforementioned table. Then an account to be paid by the winning customer is calculated by subtracting the total refund amount from a purchase sum. Here, when the refund amount becomes more than the purchase sum, the difference is written into the IC card 2 as a gift token so that the customer can use this token when purchasing next time at this shop.

Meanwhile, when betting takes place in chain shops, the settlement among chain shops is required. More specifically, the shop, which has issued more lots than other shops, must pay more refund amount to have been refund to customers. For this purpose, the IC card 3 of the POS terminal 1 stores the number of issued betting tickets and the number of winning bet as well as the actually refunded tickets. The management equipment 9 reads out these stored information from the IC card 3 and calculates an allotment. The IC card 3 in the POS terminal 1 is provided with a table for managing each data, namely the number of issued betting tickets, the number of refunded betting tickets.

In case a service provided for the service tickets is a lot, a lot so as to produce the lot result in a short term as well as a digital signature thereto is written into the IC card 2, when electronic wallet transaction using the IC card 2 is carried out. The lot is configured so that any customer can see through a balance indicator 6. When a customer purchases a commodity by the IC card 2 within a lottery refunding period or a commodity transfer period, it is automatically determined whether the lot is a winning lot or not to obtain the related service. The lot is issued when the purchase sum exceeds a certain value. It may also be possible to configure the lottery by introducing a point system so as to issue a lot when a certain amount of points are accumulated.

In case a service ticket is a coupon ticket, a coupon ticket for a new product is input in the IC card 2 whereby a commodity (for example, cigarettes) has been purchased. The coupon is exchanged for new cigarettes at the next time of transaction. Such a service promotes to obtain stable customers and stimulates purchasing.

In this system, the store IC card 3 on the shop side issues service tickets such as lots, as well as selects a winning ticket. This can prevent deliberate ticket issue or lottery drawing which may possibly be incurred by a shop clerk in a traditional way. In addition, the store IC card 3 automatically collects service tickets, thereby no need of collecting, totaling and managing coupon tickets formed of paper. This reduces trouble-some, enabling easy data handling.

This store IC card 3 is provided with the electronic wallet transaction function. Therefore it is also possible to use the store IC card 3 as a customer IC card. For example, a shop master can use a customer IC card of his own as a store IC card.

Further, the POS terminal 1 manages information such as the manufacturer of the commodity, shops in which a coupon ticket can be used, in regard of a service ticket or a coupon ticket being stored in the IC card 2. Such information is also stored in the store IC card 3. In addition, when a paper coupon ticket is used, processing information related to this paper coupon ticket is collected into the store IC card 3. The management equipment 9 which collects and manages coupon data reads out a coupon having been used from the store IC card 3, then collects and totals and transfers the management data and the coupon data to each commodity manufacturer. In such a manner, handling coupon information can be performed electronically, which substantially reduces consumption of resources such as paper. Also data handling with decreased manual intervention improves reliability. This method can be implemented without configuring a large-scale online network.

Connection unit 7 transfers electronic money and service tickets stored in the customer IC card 2 to a third party customer IC card 8, and vice versa. Accordingly, service ticket information can be transferred between IC cards or between IC card and equipment, in a quite similar manner to paper tickets. Therefore, a customer does not need to have tight connection with a service provided thereto. In other words each service can be transferred easily. Balance indicator 6 is provided for indicating electronic money or service tickets stored in the customer IC card 2.

In such a manner, IC card transaction having an equivalent circulation capability to paper service tickets can be implemented, because service ticket can transfer individually similar to service tickets formed of pieces of paper. This produces convenience to users and can promote users to use IC card.

Also, as electronic service tickets are automatically issued and collected, it is possible to reduce a labor on store side. Moreover, it is possible to manage service tickets being individually issued, thereby performing automatic settlement. Accordingly, either an error or an illegality can be prevented in settlement, etc.

Now, hereafter there are described detailed explanations on each equipment unit including an IC card.

### [POS terminal]

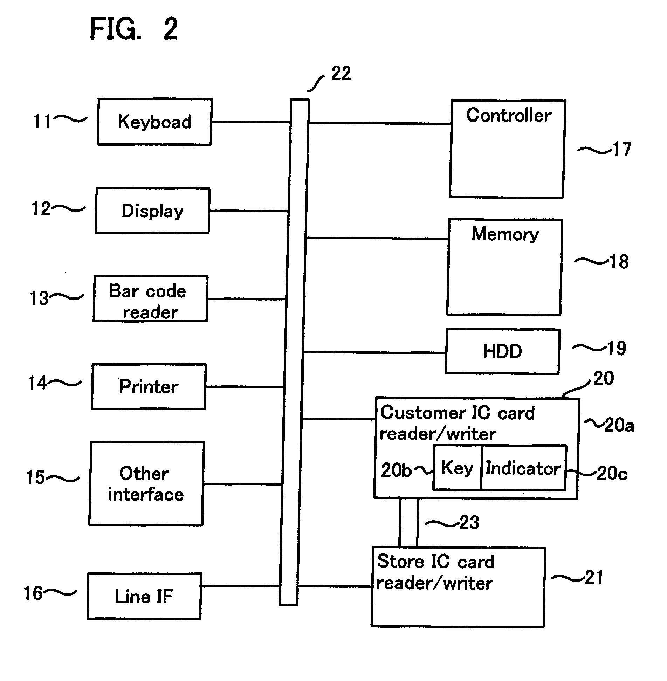

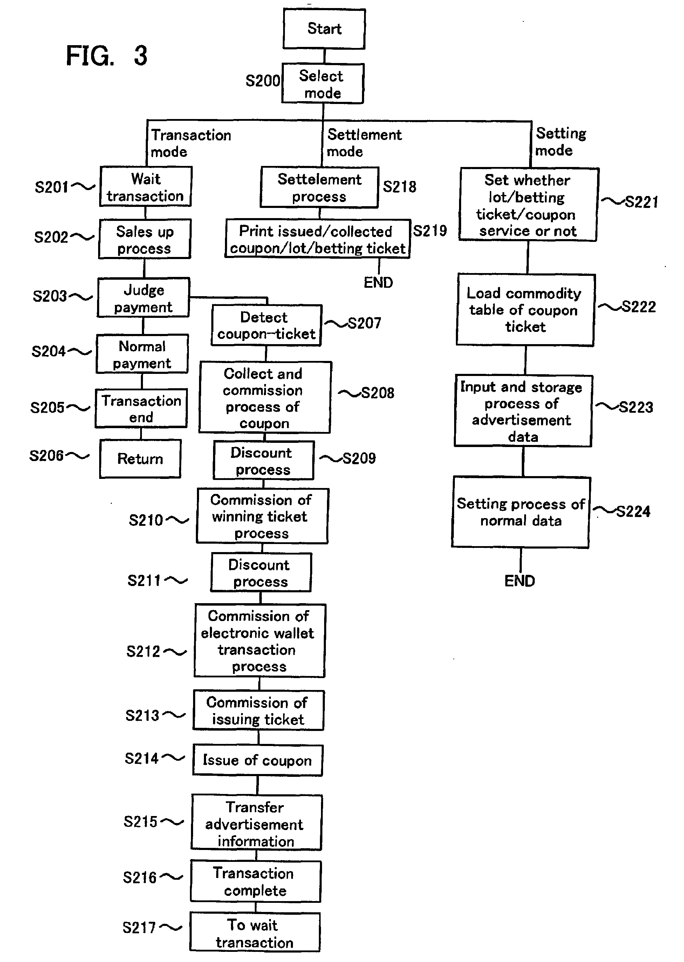

In FIG. 2, a block diagram of a POS terminal is shown. In FIG. 3, a processing flowchart of the POS terminal is shown.

As shown in FIG. 2, the POS terminal 1 includes keyboard 11, display unit 12, barcode reader 13, printer 14, interface 16 being connected to either upper equipment or a line, controller 17 constituted by a microcomputer, etc., memory 18, external storage 19 such as a hard disk, customer input pad 20 for a customer IC card, store IC card reader/writer 21, and interface circuit 15 to be connected to other equipment.

The customer input pad 20 includes a customer IC card reader/writer 20a for accessing (i.e. read/write) the customer IC card 2 being inserted thereto, a keypad 20b for inputting a personal identification number or transaction amount, etc. manually, and a display unit 20c for indicating data input, etc from keypad 20a.

The store IC card reader/writer 21 performs read/write operation from/to the store IC card 3 being dispatched to the store. Such equipment mutually connected to a bus line 22 and performs predetermined functions under the control of a program installed in the controller 17. Further, the customer input pad 20 and the store IC card reader/writer 21 are connected by a bus line 23 different from the bus line 22. Processing between the customer IC card 2 and the store IC card 3 is performed via this bus line 23. Therefore, it is possible to improve security of the transfer data.

As for processing function of the controller 17, there are provided functions of electronic wallet transaction by means of the customer IC card 2, commission of issuing service tickets, commission of selecting winning service tickets, advertising document management, etc. in addition to ordinary functions provided in conventional POS terminal or electronic cash register, such as sales registration, calculation, etc.

In this embodiment, commission function of service ticket issue performed by the controller 17 commissions to issue service tickets to the store IC card 3 which issues service tickets through the store IC card reader/writer 21 to transfer the issued service ticket into the customer IC card 2. Also, in this embodiment, the store IC card 3 has a function for determining whether or not a service ticket such as lot, coupon and betting ticket being stored in the customer IC card 2 is qualified for receiving the related service. Therefore, the commission function of selecting winning service tickets by the controller 17 denotes a function for commissioning the store IC card 3 to perform the aforementioned selection processing. Further, advertising document management function means that the controller 17 stores into either the memory 18 or the external storage 19 an advertising document produced using equipment having a document generation function, such as so-called a mobile terminal and a personal computer, being connected through the interface card 15, and writes the advertising document into the customer IC card 2 while a transaction is being processed using the customer IC card 2 according to a certain condition.

Now, hereafter an operation of the POS terminal shown in FIG. 2 is illustrated according to the flowchart shown in FIG. 3.

(S200) First, an operator of the POS terminal 1 selects a POS terminal mode in a conventional manner. Typically, the operator inserts a key owned by a shop clerk into a non-illustrated keyhole provided on the keyboard 11, and then specifies a mode by rotating the key. The controller 17 switches the mode to either of transaction mode, settlement mode or setting mode according to the specified mode by keyboard 11. First, the mode is shifted to the setting mode (S221).

(S221) In the setting mode, the operator specifies from the keyboard 11 whether or not each service such as lottery, betting ticket and coupon ticket is to be performed. Hereafter, a lottery service and a coupon ticket service are mainly explained in this embodiment. A betting ticket service can be implemented using a processing similar to the lottery service except for additionally inputting a betting number.

After setting a service to be effected, a shop clerk mounts the store IC card 3 onto the store IC card reader/writer 21. In this stage, if lottery, betting ticket and coupon ticket services are not to be performed, the procedure proceeds to step S223. If at least coupon ticket service is specified, the procedure proceeds to step S222.

(S222) The store IC card reader/writer 21 confirms that the mounted store IC card 3 is an authorized IC card. Also, the store IC card 3 confirms whether the store IC card reader/writer 21 has an authorized access right. After confirmation, a commodity table stored in the store IC card 3 is read out to expand to the memory 18. This table includes commodity articles for which coupon tickets are to be issued.

(S223) This step is a step of confirming an input or storage status of advertisement data desired an issue by the store. Namely, the controller 17 reads out advertisement data of the store memorized in the external storage 19 and displays onto the display unit 12. The controller 17 also inquires of the operator whether or not updating advertisement contents is necessary.

If updating advertisement contents is required, the operator connects equipment for inputting data (such as an aforementioned small-sized personal computer) to the other interface 15 and inputs an advertisement document. The input document is transferred to the external storage 19 to store in a predetermined area therein. When this work is completed, the procedure proceeds to step S224.

(S224) In this step, ordinary data is set. For example, the operator sets state parameters of an POS terminal as usually carried out, including specifying whether or not an accumulation point service on a sales amount basis is adopted, changing a price of an article, etc. on completion of this process, the controller 17 displays the completion of the setting onto display unit 12 and the procedure returns back to step S200 in which a decision for branching by mode is performed. Thus the setting mode is completed. In ordinary circumstances, the shop clerk rotates the key for changing the mode to the transaction mode.

(S201) When the shop clerk sets the key position specifying the transaction mode, the POS terminal 1 is shifted in a transaction waiting condition.

(S202) When a customer purchases a commodity, an ordinary sales processing is performed. Namely, the POS terminal 1 acquires an article code by means of either reading a barcode attached to the commodity using the barcode reader 13 or inputting an article type through the keyboard 11.

According to the input article code, the controller 17 performs a known price lookup processing, that is, obtaining process of the commodity name (or the commodity classification code) and the price of the commodity based on the input article code. This is normally referred to as the commodity registration processing. The operator performs this commodity registration processing for the whole commodities to be purchased, and at the same time the printer 14 prints out the detailed purchase information. The detailed purchase information as well as a total purchase amount is stored into the memory 18.

(S203) On completion of the commodity registration processing, the shop clerk inquires of the customer the type of payment, i.e. whether the payment is to be made by cash, credit card, or electronic wallet using the IC card. Depending on this inquiry result, the shop clerk operates the keyboard 11 to input the type of payment. Based on the input type of payment, the controller 17 proceeds to either step S204 namely an ordinary processing for the payment by cash or credit card, or step S207 namely a processing routine for the payment by the electronic wallet.

(S204) In case the payment by cash or credit card is specified, the controller 17 performs payment processing following a known procedure. Namely, either of a deposit amount or credit card number is input. A change is then calculated.

(S205) When the transaction is completed, the result is printed out onto a receipt.

(S206) The controller 17 then calculates the sum to store to the external storage 19. Also, the sum on each commodity category is calculated and stored. After such an ordinary transaction processing is completed, the process proceeds to step S201 in which the POS terminal falls into a transaction waiting state.

(S207) Meanwhile, in case the payment by electronic wallet is specified as the payment type, the controller 17 reads from the customer IC card 2 through the customer IC card reader/writer 20a commodity information of a coupon ticket having been transferred and stored in another transaction before. The commodity information being read out is then compared to the commodity codes having been sold and registered this time. Thus it is identified whether there exists the commodity being registered this time which coincides with the commodity stored in the commodity information of the coupon ticket extracted from the customer IC card 2.

(S208) Through this identification, if there exists a commodity of interest, the controller 17 commissions the store IC card 3 being mounted on the store IC card reader/writer 21 to collect the coupon ticket concerned. Based on this commission, as explained later in FIG. 11, the store IC card 3 receives a transfer of a coupon ticket of interest from the customer IC card 2. On completion of transferring the coupon ticket of interest to the store IC card 3, the store IC card 3 reports this to the controller 17.

(S209) The controller 17, on receipt of the transfer completion report, proceeds to step S209. That is, the controller 17 calculates the discount amount by obtaining discount rate of the coupon ticket for the sales amount of the commodity being registered this time and stored in the memory 18. This discount amount is then stored in the memory 18. At the same time the information is transferred to the printer 14 to print out the discount rate and the discount amount onto a receipt in a form such as "coupon ticket, discount XX%, discount amount ¥YYY".

(S210) When the coupon ticket processing is completed, the process proceeds to step S210 in case that the lottery/betting ticket service is specified in the setting mode of step S221.

In the lottery/betting ticket service processing, the controller 17 commissions the store IC card 3 through the store IC card reader/writer 21 to the process. As explained later in FIG. 10, the store IC card 3 stores a winning number of lotteries, and a winning number of betting tickets as well as an electronic signature therefor. The store IC card 3 reads the information on the lot and the betting ticket stored in the customer IC card 2 from the customer IC card 2 through the store IC card reader/writer 21, the bus 23 and the customer IC card reader/writer 20a. Then the store IC card 3 checks whether or not the lot or the betting ticket owned by the customer IC card 2 has a winning number. When the customer IC card 2 owns the winning lot or the winning betting ticket, the store IC card 3 requests the customer IC card 2 to transfer the winning lot or ticket to the store IC card 3 and receive it. Thereafter, the store IC card 3 notifies the controller 17 of the transfer completion through the store IC card reader/writer 21, together with service information on the amount for the winning lot or the winning ticket to be provided by the service, for example a discount value, a prize value, etc.

(S211) The controller 17, on receipt of this notification, stores the discount value into the memory 18 and then supplies to the printer 14 the service information such as the winning number and the prize value to print out this information onto a receipt.

(S212) Then, the controller 17 calculates a transaction amount to be withdrawn from the electronic wallet of customer IC card 2. This calculation result is obtained by subtracting the discount value stored by step S209 and the discount value calculated by step S211 from the total sales amount stored in the memory 18. The calculated transaction amount is supplied to the printer 14 to print out onto the receipt. Further, the controller 17 commissions the store IC card 3 through the store IC card reader/writer 21 to perform an electronic wallet transaction of this transaction amount.

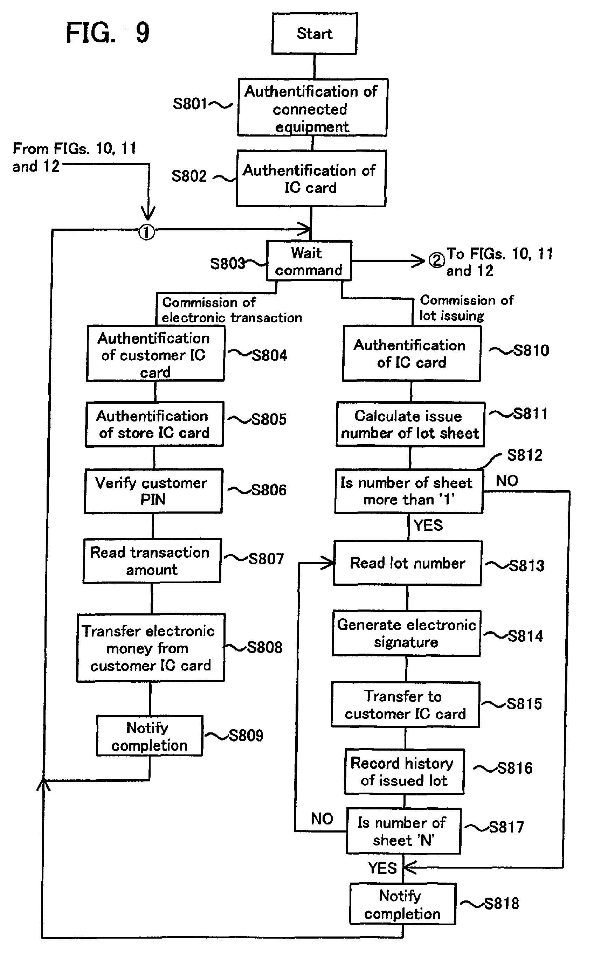

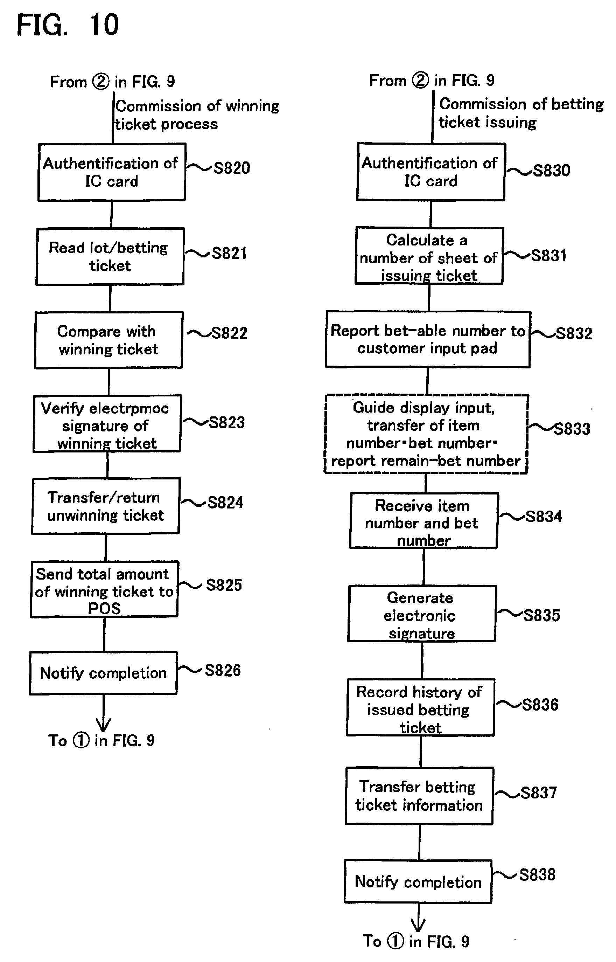

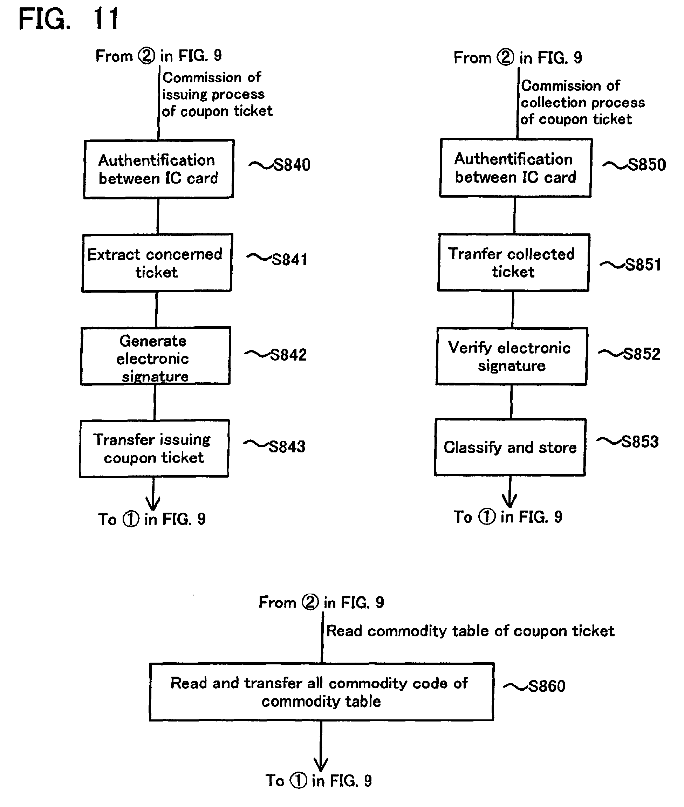

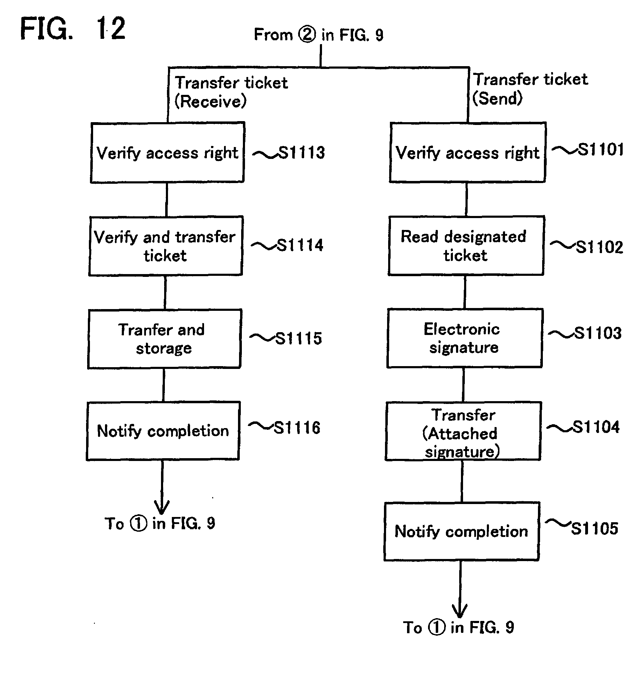

As further explained in FIG. 9, based on the aforementioned commission, the store IC card 3 communicates the customer IC card 2 through the store IC card reader/writer 21, the bus 23, and the customer IC card reader/writer 20a to transfer electronic money of the related sales amount from the customer IC card 2 to the store IC card 3. On completion of this transfer, transfer completion notification is issued from the store IC card 3 through the store IC card reader/writer 21. Based on this notification, the controller 17 supplies to the printer 14 a transaction amount of the requested transfer together with the information indicating the completion of electronic wallet transaction, and the printer 14 prints out it onto the receipt. For example, "Electronic money ¥13,000 Paid. Card No. 12345" is printed out on the receipt. Thus the commission-processing step S212 of the electronic wallet transaction is completed.

(S213) Then, the controller 17 requests the store IC card 3 to issue a lot. Prior to this processing, the controller 17 calculates the number of lots to be issued based on the total sales amount that was previously calculated and stored in the memory 18. More specifically, for example, in case a sheet of lot is to be issued per Yen 1,000, the total sales amount is divided by this 1,000 to obtain the number of sheets of lots for issue. The request from the controller 17 to the store IC card 3 includes this information of the number of sheets. As will be explained later in FIG. 9, after the store IC card 3 receives this request, the store IC card 3 creates lots of the designated number of lots, each having an electronic signature, and transfers it to the customer IC card 2. The lot number having been issued is reported to the controller 17 excluding the electronic signature. The controller 17 supplies this information to the printer 14 to print out the lot number onto the receipt. Thus the lot issue processing is completed.

(S214) On completion of the lot issue processing, the controller 17 compares the commodity being purchased this time with the coupon ticket commodity table being previously expanded in the memory 18 in step S222 of setting mode and checks whether the commodity to which a coupon is to be issued is included in the purchased commodity. If there is a commodity for which a coupon ticket has to be issued newly in the purchased commodity, the controller 17 commissions the store IC card 3 to perform the coupon ticket issue processing with the commodity code concerned.

As will be explained later in FIG. 11, the store IC card 3 communicates with the customer IC card 2 and creates a new coupon ticket corresponding to the commodity code concerned and transfers it to the customer IC card 2.

On completion of the coupon ticket issue processing, the store IC card 3 transmits a completion notification to the controller 17. The controller 17 then supplies the printer 14 the information on the issued coupon ticket and then the printer 14 prints out onto a receipt the fact of the coupon ticket issue as well as the commodity name to which the coupon ticket is available. For example, the print may be "10% discount coupon issued; XXX juice; due Jan 1st., 1999", in which the commodity name 'XXX juice' to which the coupon is available with the information of the discount rate and the effective period are printed. The whole information is stored in the store IC card 3.

(S215) On completion of the coupon ticket issue processing, the controller 17 reads the advertisement information stored in the external storage 19 and then supplies it to the customer IC card reader/writer 20a. The customer IC card reader/writer 20a stores the supplied advertisement information into a predetermined area of the customer IC card 2. Thus the advertisement information transfer processing is completed.

(S216) The controller 17, on completing a sequence of the aforementioned processing, issues an ejection order of the customer IC card 2 to the customer IC card reader/writer 20a, thereby returning the customer IC card 2 to the related customer. The controller 17 then collects information on the collected coupon ticket, the collected lot, the issued coupon, and the issued lot and stores into a specific area in the memory 18. At the same time, the controller 17 performs ordinary transaction processing carried out in step S204, for example, calculation of the total sales amount on a commodity classification basis, and ejects the receipt. Thus the transaction is completed.

(S217) After this processing is completed, the controller 17 returns back to the state of waiting a transaction in step S201.

Thereafter, every time a customer purchases a commodity and makes transactions using the POS terminal 1, each the aforementioned steps in the transaction mode are carried out. Now, hereafter the settlement mode is explained.

(S218) When a shop clerk closes account at the time of closing the shop or taking places to another clerk, the clerk switches the aforementioned rotating key position to a settlement mode position on the keyboard 11. This shifts the controller 17 into the settlement mode. In the settlement mode, an ordinary closing processing is performed in step S218. For example, the printer prints out the whole transactions handled in the POS terminal 1 of interest, the whole transaction is stored to the external storage 19, and the printer 14 prints out the total sales amount on a commodity class basis.

(S219) The controller 17 calculates the total number of coupon tickets issued on the day, the number of coupon tickets issued on each commodity, the total number of coupon tickets collected on the day, the number of coupon tickets collected on each commodity, the total sum of discount amount by coupon tickets, and the sum of discount amount by coupon tickets on each commodity, and outputs it to the printer 14 to print out. In addition, in regard to the lottery and the betting tickets, calculation of the total and printout are performed in a similar manner to the coupon tickets. Regarding this print output, for the lots and the betting tickets having been issued, lot numbers, the number of lots, the number of bets to each choice are calculated and printed. For the lots and the betting tickets having been collected, lot numbers, the number of lots, betting ticket numbers, the amount of services and the total thereof (for example, prize amount and the total thereof) being supplied to customers for the winning lot and/or the winning betting ticket are calculated and totaled to print out. The processing is then completed.

In such a manner, when the electronic wallet transaction is performed by the POS terminal 1, the store IC card 3 of the POS terminal 1 has functions of transferring a service ticket such as lot, betting ticket and coupon ticket to the customer IC card 2 used as an electronic wallet, and of extracting and collecting such a service ticket. The service information can be transferred to others independently, similar to a traditional service ticket formed of a piece of paper, enabling to promote circulation of service tickets.

As it is possible to transfer individually, it is enables automated management of service ticket issue, service ticket collection, etc. Also, such automated issue and collection of service tickets enable to reduce a lord work on a shop side.

In relation to the electronic wallet transaction, services such as discounting can be performed. Therefore, an attraction of the electronic wallet transaction is improved to the customers. This also benefits the shops introducing cards for attracting customers.

Further, even when a service ticket is transferred individually, it is possible to provide a secured service because highly secured IC cards are employed.

Still further, as the store IC card 3 is used and the transaction is performed between the IC cards, it enables to provide services with high secrecy and safety, and also enables easy management in affording the service. Accordingly, a manager of a POS terminal has also benefits.

### · · Customer IC card · ·

Next, the details of the customer IC card 2 will be explained hereafter.

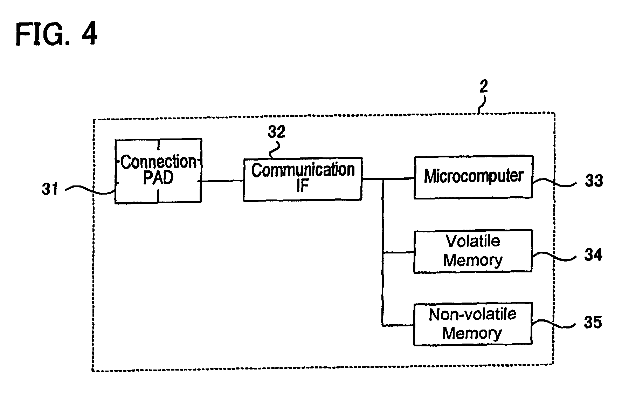

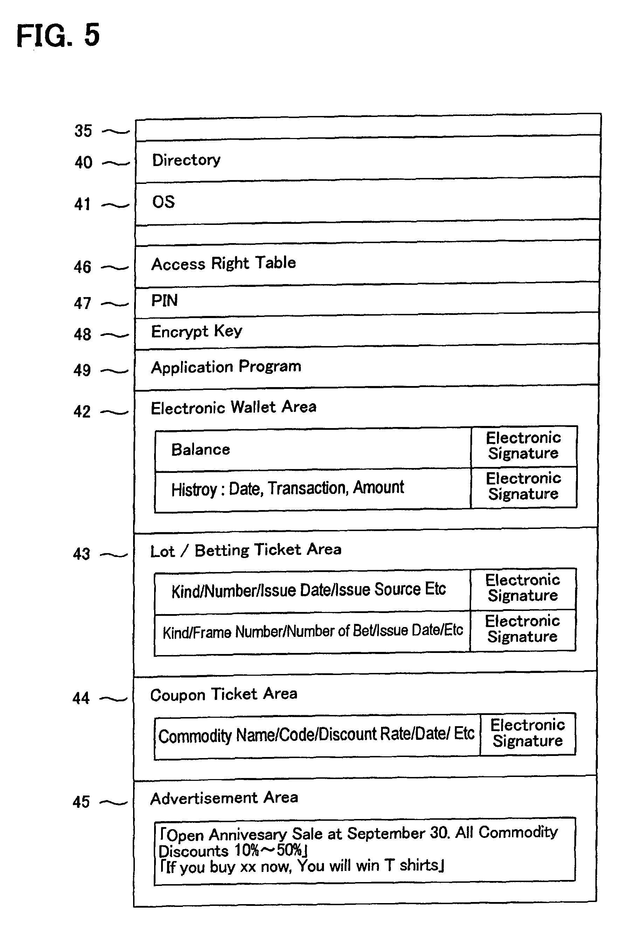

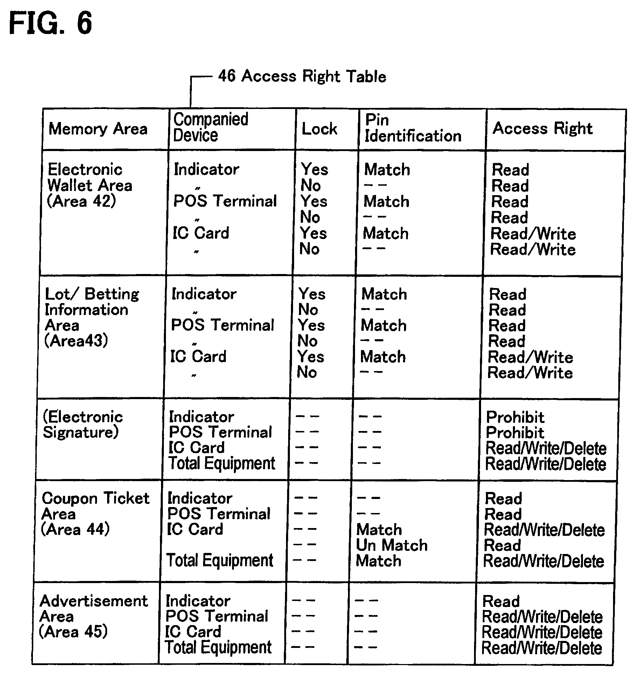

FIG. 4 shows a circuit block diagram of the customer IC card 2. FIG. 5 shows an explanation diagram of a memory area in the customer IC card 2. Also, FIG. 6 shows an explanation diagram of an access authorization table therein.

As shown in FIG.4, the customer IC card 2 is provided with a connection terminal 31 standardized by ISO, communication interface circuit 32 to communicate with external equipment, a microcomputer 33 connected thereto, a nonvolatile RAM (hereinafter simply referred to as memory) 35, and a volatile RAM (also referred to as memory) 34. The above-mentioned components are packaged in a plastic card having the same size as a standardized credit card. In this embodiment, the explanation is given for an IC card having connection terminal 31. Needless to say, an IC card having no connection terminal, or a wireless IC card, is applicable. In case of wireless IC card, the communication interface circuit 32 can be considered to have a wireless function.

In the microcomputer 33, predetermined programs are stored. These programs include an authentication program for verifying whether or not equipment accessing the IC card is authorized equipment, an authentication program for verifying whether or not the opposite IC card being in communication has an authorized access right. There is also included a verification program for verifying whether or not the person handling the IC card is an authorized person. Moreover, an authentication program for verifying the above in the opposite direction is also provided. This program enables either the equipment or the IC card being connected on the opposite side to verify the authenticity of the IC card of interest.

More specifically, in the memory 35, storage areas are provided for storing various types of information shown in FIG. 5. In FIG. 5, there are provided in the memory 35 a directory 40 and an OS program 41, as well as an electronic wallet area 42, a lottery and betting ticket information area 43, a coupon ticket area 44, and an advertisement area 45. Further, in the memory 35, there are stored an access right table 46, a personal identification number (PIN) 47, an encryption key 48 for use in the authentication program, and a variety of application programs 49.

In the electronic wallet area 42, a remainder of electronic money and an electronic signature therefor are stored. Further in this area 42, there are stored past transaction data including the date of transaction, transaction type (payment or receipt), transaction amount and electronic signature therefor, and identification information on the dealers to which transactions are made. These information sets are divided for each transaction and are stored in the area 42. Tens of transactions can be recorded in electronic wallet area 42, each partitioned area is controlled so as to use cyclically in a known manner.

In lottery and betting ticket information area 43, the following information is stored: As for lottery, lot number, date of issue, issue shop, and an electronic signature related to the lot number are stored on a per lottery basis. Also, as for betting tickets, the bet number, the number of bets, date of issue, issue shop, and an electronic signature related to the betting ticket are stored on a per betting ticket basis.

In coupon ticket area 44, the sets of information including the commodity code concerned, discount rate, term of validity, issue shop, and an electronic signature related to the coupon ticket.

Regarding electronic signatures in areas 42, 43 and 44, these signatures are stored in an area separate from the balance, transaction records, betting ticket information and coupon ticket information. This area for storing electronic signatures is configured not to read out when being directly accessed from external equipment.

Advertisement area 45 is provided for storing advertisement information being supplied from the POS terminal 1, which was explained before referring to FIG. 2. There is stored a text of character code, which can be decoded using the balance indicator 6 shown in FIG. 1.

The access right table 46 is provided for permitting the access right of the equipment to each area 42 to 45 of the IC card for each kind of the access equipment. For example, the access right is set with classified access permission types such as reading only, updating permitted, deleting permitted, and entirely inhibited.

In FIG. 6, the customer IC card 2 has two states of a locked state and an unlocked state. When in the locked state, inputting the personal identification number (PIN) is required. only when the PIN is matched, the IC card 2 can access the areas according to the access right being specified by the access right information in the access right table.

For example, in FIG. 6, accessing electronic wallet data stored in the electronic wallet area 42 as shown in Fig.5 is permitted to read when the access is made from the equipment the type of which only data indication is to be permitted to, such as the balance indicator or the POS terminal. The access right is preset in the table 46 so that the other access classes such as writing, deletion and update are inhibited for these access equipments. In regard to electronic wallet data, lottery/betting information, and coupon information, the access right thereto is preset so that, in only case that the accessing equipment is an IC card, such data or information can be either written or deleted by microcomputer 33 provided in the IC card.

### · · Store IC card · ·

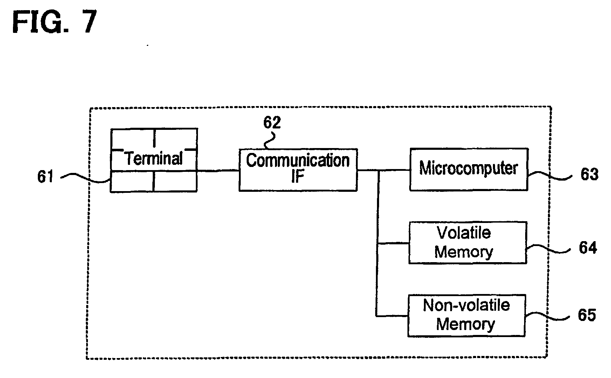

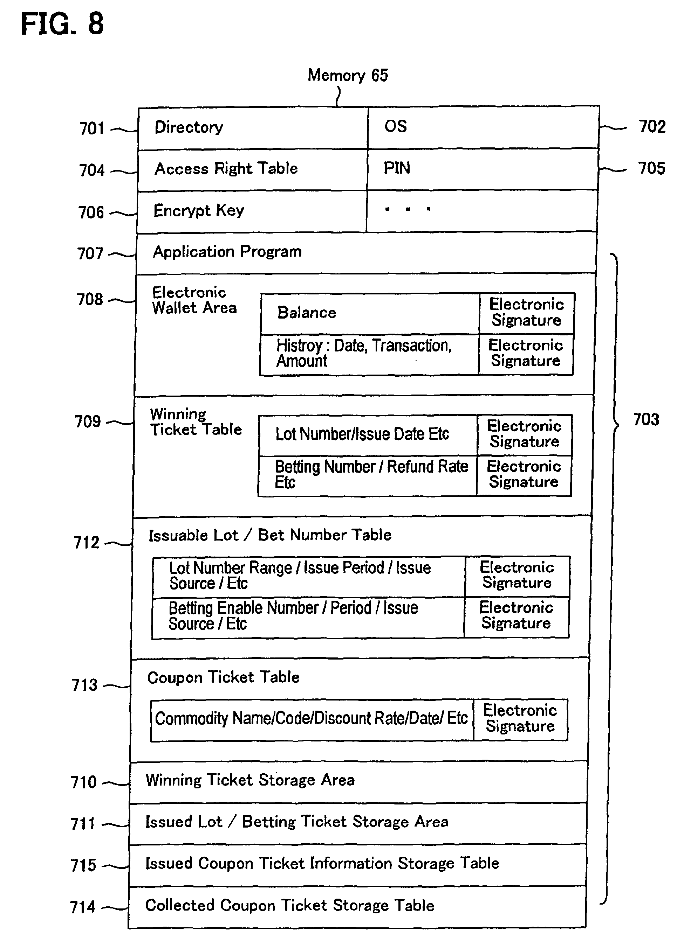

FIG. 7 shows a block diagram of a store IC card, and FIG. 8 shows an explanation diagram of a memory area therein.

As shown in FIG. 7, the hardware configuration of the store IC card 3 is similar to the configuration of the customer IC card 2; having connection terminal 61, communication interface 62, microcomputer 63, volatile memory 64 and nonvolatile memory 65. This store IC card 3 can also be used as an ordinary customer IC card 2.

In FIG. 8, a memory area of the nonvolatile memory 65 provided in the store IC card 3. There are provided directory area 701, OS area 702 and application area 703. The application area 703 includes; an access right table 704 which is similar to the access right table shown in FIG. 6; a personal identification number 705 of the owner of the IC card; key information (encryption key) 706 for use in encrypting transmission information; and an application area 707 for storing a variety of application programs.

As areas in a rewritable nonvolatile memory 65, there are disposed electronic wallet area 708, winning ticket table 709, winning ticket storage area 710, issued lots/betting tickets storage area 711, table of issuable lot numbers/betting ticket item numbers 712, coupon ticket commodity table 713, collected coupon ticket storage area 714, and issued coupon ticket storage area 715.

In the electronic wallet area 708, the same types of data as electronic wallet area of the customer IC card 2 are stored.

The winning ticket table 709 stores information on the lot or betting which won in the past lotteries or bets. As for the lottery, lot number, date of issue, and issue shop and the electronic signature therefor are stored. Further, information on the service afforded to the winning ticket is stored. For example, this information on the service includes "Trip to Hawaii", "¥50,000 Gift token for department store" "discount fee", etc., in other words the information related to the service itself. In addition, as for the betting tickets, information sets on winning ticket item number, refund against a bet unit, and term of validity of betting tickets are stored together with an electronic signature.

The winning ticket storage area 710 stores information on the winning ticket transferred from the customer IC card 2, as mentioned later. In this area, as for the lottery, the lot number, the date of issue and the issue shop information are stored together with an electronic signature therefor. Also, as for the betting ticket, the betting ticket number, the number of bets in the betting tickets concerned, the date of issue of the betting ticket concerned, and the issue shop code indicating the shop issuing the betting ticket concerned, together with an electronic signature therefor. Inthis area, each plurality of lots or betting tickets is stored in a form with which the tickets can be classified later.

The issued lots/betting tickets storage area 711 stores the lots and betting tickets having been issued by this store IC card 3 every time these lots or tickets are issued. When a lot is issued, there is stored the lot number, the date of issue, the issue shop code for identifying the shop having issued the lot, as well as an electronic signature therefor. Such a sequence of information for a lot is the identical information stored in the customer IC card 2. Also, as for a betting ticket, the betting number, the number of bets, the date of issue are stored. Among such information, as for the number of bets, when for example there are three frames for betting namely '1', '2' and '3', and six selectable combinations for betting namely '1', '2', '3', '1-2', '1-3' and '2-3', the number of bets having been bet for each combinations are stored.

The table of issuable lot numbers/betting ticket item numbers 712 stores information on lots or items (combinations) for betting ticket which are issuable by the store IC card 3 concerned. As for a lot, the aforementioned last three digits are stored in this table 712 indicating the numbers of issuable lots. For example, assuming that totally the numbers 001 to 999 can be issued at a certain shop street during a certain period, and assuming further that the store IC card 3 of interest can issue lots only having the number 001 to 100, these numbers 001 to 100 is stored in this table 712. With this information, the store IC card 3 of interest can issue a lot having any of the designated numbers only. For this purpose, an issue program of the store IC card 3, which will be described later, assigns a number to each lot to be issued starting from the minimum number (for example, 001) up to the maximum number (for example, 100). As for the allowed period of issue, the sales period with lots held by the shop street is set. Together with the aforementioned information, an electronic signature to be attached to each lot is also stored in this table 712.

Also, as for betting ticket item numbers stored in this table 712, the frame numbers for betting are stored. More specifically, as mentioned earlier, in case there are six combinations for the bet, namely 1, 2, 3, 1-2, 1-3 and 2-3, these data are stored independently. Further, as for issuable period, the bet-accompanied sales period is stored by means of date information, which is similar to the case of issuing lottery. By this information, the bet-accompanied sales period can be distinguished. In addition, an electronic signature data to be attached to each betting ticket is also stored.

The electronic signature data for each lot ticket or betting ticket being stored in the area 712 are generated by management equipment 9 provided for managing the system totally, which will be described later. These electronic signatures are necessary for verification to be performed later.

The coupon ticket commodity table 713 is used when a commodity is purchased. In this table 713, information for identifying a coupon ticket before expiration of validity is stored. Namely, the table 713 includes the information on whether or not there is a commodity among the purchased commodities to which a coupon ticket is to be issued, and whether or not the coupon ticket stored in the customer IC card 2 can be applied to the purchased commodity for discount. Also for a coupon ticket newly to be issued, information on the issue shop as well as an electronic signature therefor is stored. For example, the stored information includes a commodity code, a discount rate by the coupon for the commodity code and the term of validity of the coupon ticket concerned, as well as a commodity code of a coupon ticket to be issued when the commodity of interest is purchased, and an electronic signature generated in management 9 which will be mentioned later.

The collected coupon ticket storage area *714* is provided for storing coupon tickets collected from the customer IC card 2. In this area 714, there are stored information corresponding to the coupon information stored in the customer IC card 2, the date of use i.e. the date of collection, the shop code in which the coupon is used (as shown 'used shop' in figure), and an electronic signature related to the coupon ticket information stored in the customer IC card 2.

The issued coupon ticket storage area 715 is provided for logging the coupon ticket information issued by the store IC card 3. In this area 715, there are stored a commodity code to which the coupon ticket is available, the discount rate for the commodity when purchased, the term of validity, the issue shop for identifying the shop having issued the ticket, and an electronic signature to the coupon ticket being generated by management 9.

### · · IC card transaction processing · ·

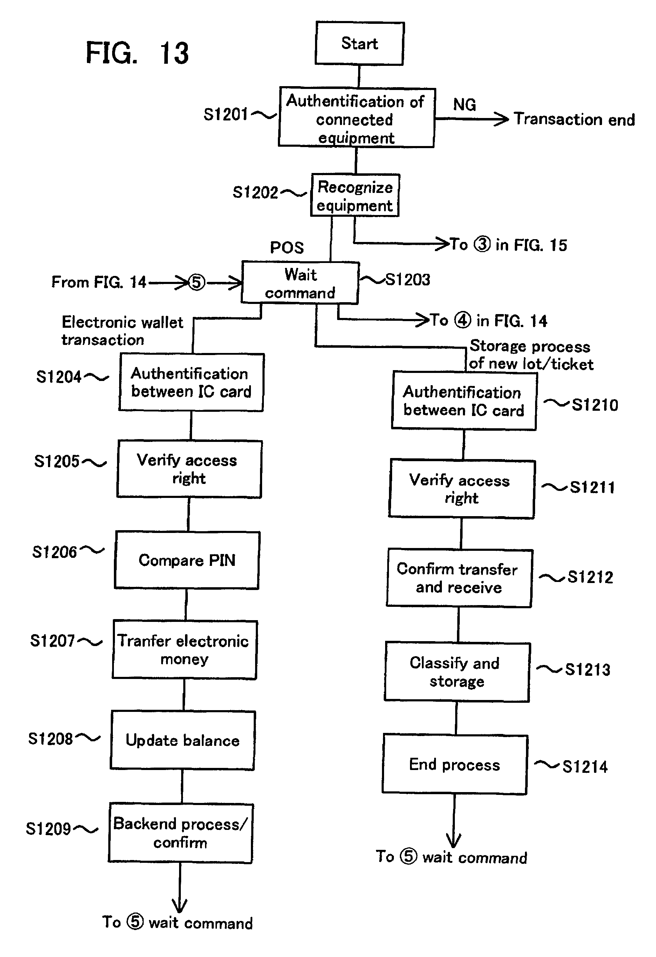

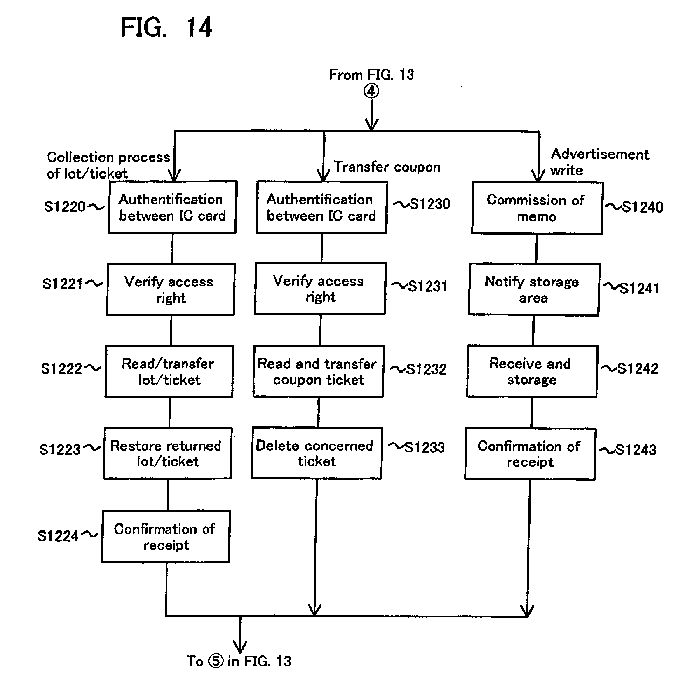

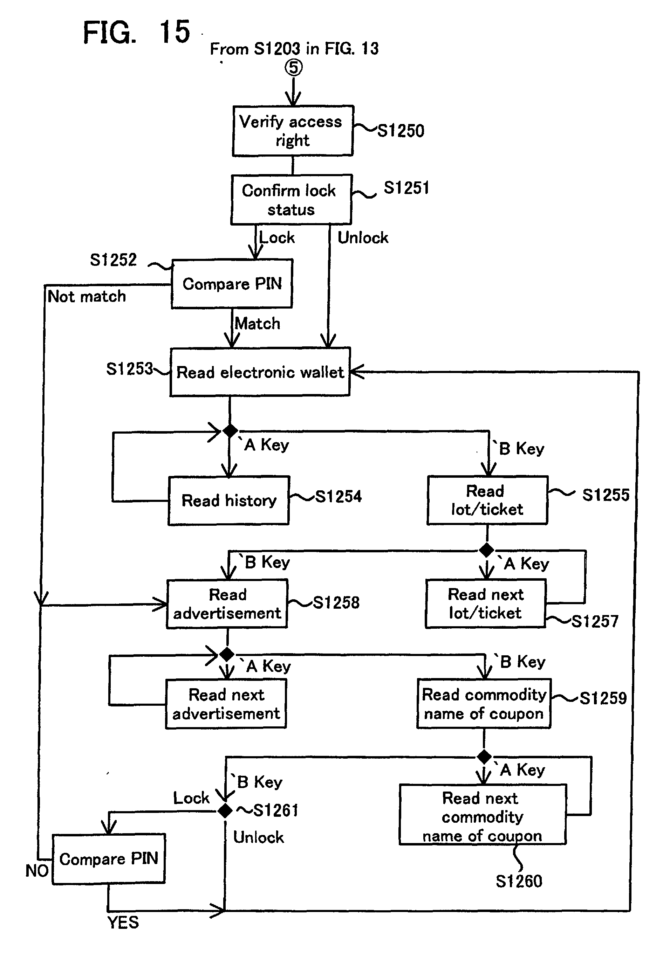

In the following description, an operation being performed between IC cards are illustrated in accordance with the flowcharts of each processing performed in the customer IC card 2 and the store IC card 3. Namely, FIGS. 9 to 12 show flowcharts of the store IC card 3, while FIGS. 13 to 15 show flowcharts of the customer IC card 2.

### [Initial processing]

### Steps S801, S802:

The program in the store IC card 3 is started at the time the store IC card 3 is set in the store IC card reader/writer 21 in Fig.2 to execute steps S801 and S802 for mutual authentication, although this is not illustrated in the POS processing flowchart shown in FIG. 3.

In this mutual authentication, a random number request command is issued from the POS terminal 1 shown in FIG. 2 to the store IC card 3. In reply to this request, the store IC card 3 generates a random number to transmit to the POS terminal 1. The POS terminal 1 encrypts this random number using a certain encryption key and transmits back to the store IC card 3. The random number transmitted back is decrypted in the IC card 3, and then is compared to the generated random number. In such a way the authentication is performed on the equipment side (step S801).

Next, in the POS terminal 1 a random number is generated. An authentication command is then transmitted to the IC card 3 together with the generated random number. An encryption processing program in OS area 41 of the IC card 3 encrypts the received random number using an encryption key 48 provided in the IC card 3, and the encrypted number is transmitted to the POS terminal 1. The POS terminal 1 decrypts the received encrypted number to obtain a random number and compares the decrypted number with the generated random number. If these data coincide, it is verified that an authorized the IC card 3 is inserted.

This processing is specified as authentication in ISO standard. Such authentication is performed prior to the processing for stored information or the like between the IC card and external equipment. As mentioned later, the processing steps S804, S810, S820, S830, S840 and S850 that are performed in the store IC card 3, and also processing steps S1204, S1210, S1220 and S1230 performed in the customer IC card 2 are the same authentication processing. In these cases the authentication is performed mutually between the customer IC card 2 and the store IC card 3. Hereafter this processing is referred to as an authentication between IC cards and further description on this processing is omitted.

### Step S803:

Referring to FIG. 9, in this step S803, the store IC card 3 is shifted into a command waiting state. The command is to be transmitted from the POS terminal 1 through the store IC card reader/writer 21.

### [Electronic wallet transaction processing]

Transaction processing of electronic wallet in the store IC card 3 is performed in steps S804 to S809 shown in FIG. 9, while transaction processing of electronic wallet in the customer IC card 2 is performed in steps S1204 to S1209 shown in FIG. 13. Therefore, hereafter the corresponding steps in both FIGS. 9 and 13 will be explained together.

### Steps S804, S805, S1204:

In step S208 performed in the POS shown in FIG. 3, when a transaction processing of electronic wallet is commissioned from the POS terminal 1 to the store IC card 3, first the customer IC card authentication and the authentication of the store IC card 2, or authentication between the IC cards, are carried out by steps S804 and S805, or step S1204 shown in FIG. 13, respectively. Thus the mutual authentication is performed. As having been explained in FIG. 2, the store IC card 3 and the customer IC card 2 communicate with each other through the store IC card reader/writer 21, bus 23 and the customer IC card reader/writer 20a.

### Step S1205:

The customer IC card 2 proceeds to this step S1205 when the authentication is completed, in other words when the customer IC card 2 verifies the store IC card 3 is the authorized IC card. In this step, the customer IC card 2 retrieves access the right table 46 in the nonvolatile memory 35 of the customer IC card 2 and determines whether an access to the electronic wallet area 42 is permitted. When the access is permitted, the customer IC card 2 read out the data in the electronic wallet area 42 into the nonvolatile memory 34.

### Steps S806, S1206:

The customer IC card 2 requests the store IC card 3 a personal identification number (PIN). The store IC card 3 requests the customer IC card reader/writer 20 shown in FIG. 2 to obtain a PIN input. The customer IC card reader/writer 20 then indicates this onto the indicator 20c. When a customer inputs the own PIN from the keypad 20b, the input information is supplied to the customer IC card 2. The customer IC card 2 then compares the input PIN information with PIN 47 stored in the memory area 35 shown in FIG. 5. If each PIN coincides with the other, the customer IC card 2 releases the locked state and outputs an access permission notification to the store IC card 3. Thereafter the process proceeds to the next step. It may also be possible to perform communication during the above-mentioned steps in an encrypted form.

On receipt of the access permission notification in step S806, the store IC card 3 proceeds to the next step. Steps S807, S808, S1207, S1208:

The store IC card 3 performs electronic cash transfer in these steps S807 and S808, while the customer IC card 2 also performs electronic cash transfer in step S 1207. More specifically, in the store IC card 3, transaction amount corresponding to the purchase amount has been transferred in the previous commission and developed into the memory. In step S807, the store IC card 3 reads in this transaction amount. Thereafter in step S808, the store IC card 3 requests the customer IC card 2 to transfer the electronic cash corresponding to this transaction amount. The customer IC card 2 then subtracts the transaction amount of interest from the balance recorded in the electronic wallet area 42 (S1208). The transaction amount is transferred to the store IC card 3 together with a transfer command. On receipt of this transfer, the store IC card 3 updates the own electronic wallet area 708. Thereafter an exchange completion notification is transmitted to the customer IC card 2. Thus the exchange of electronic cash is completed. On the side of the customer IC card 2, electronic cash transfer is also completed when the exchange completion notification is received.

The above-mentioned communication in regard to electronic cash is performed in a form of secured communication. Namely, when requesting cash transfer from the store IC card 3 to the customer IC card 2, the transfer amount is encrypted using the encryption key and the encryption program having been used when performing the previous mutual authentication. In the customer IC card 2, this encrypted amount information is decrypted to obtain the transaction amount information. Similarly, when the customer IC card 2 transfers the transaction amount, a transfer command and an encrypted transaction amount is transmitted. The store IC card 3 decrypts this amount to receive electronic cash.

Here, encryption may be applied not only for transferring transaction amount, as described below. As an example, a portion of data for communication is encrypted first. The entire information including the encrypted data on the portion concerned is transmitted to the opposite party. On the opposite party side, the received information is decrypted and the entire received data is compared to examine whether the encrypted portion concerned coincides. At any rate the encryption technology is applied so that the accurate communication information can be exchanged between both parties.

### Step S809, S1209:

In FIG. 9, on completion of transaction amount exchange, the store IC card 3 transmits to the POS terminal 1 the transaction completion notification through the store IC card reader/writer 20. The store IC card 3 then returns to the command waiting state in step S803.

In FIG. 13, on completion of electronic cash transfer, the customer IC card 2 stores the transaction record into the history area in the electronic wallet area 42 of the memory 35, and then the electronic wallet transaction is completed. The customer IC card 2 is shifted to the command waiting state in step S1203.

### [Coupon ticket collection processing]

The store IC card 3 performs coupon ticket collection processing through steps S850 to S853 shown in FIG. 11, while the customer IC card 2 also performs coupon ticket collection processing through steps S1230 to S1234 shown in FIG. 14.

### Steps S850, S1230, S1231:

In these steps S850, S1230, the aforementioned mutual authentication is performed. Thereafter, the customer IC card 2 verifies access right against coupon ticket storage area in step S1231.

### Steps S851, S1232:

In step S851, the store IC card 3 transmits to the customer IC card 2 a collection command together with a commodity code of coupon ticket specified by the POS terminal 1. On receipt of the command, the customer IC card 2 performs collection processing in step S1232. More specifically, the customer IC card 2 retrieves the coupon ticket area 44 using the commodity code included in the 5 command. When the commodity code of interest is found, the customer IC card 2 reads in the information regarding the commodity code of interest, and transfers to the store IC card 3. The information set for transfer includes the commodity code, the discount rate, the date of issue, the issue shop, and the electronic signature therefor. As for the electronic signature, it is possible to use a signature obtained from the encrypted data of coupon ticket information, commodity code, discount rate, date of issue in the management source, company code of the management source, and manufacturer code, using a specified encryption key. The transfer information between the IC cards is encrypted using an encryption key applied for the mutual authentication.

### Step S852, S1233:

The store IC card 3 decrypts the information when having been encrypted and collects this in step S851. Thereafter in this step S852, the store IC card 3 verifies the received electronic signature by comparing with the electronic signature owned by itself in the table area 713. After the coupon is proven to be authentic in the above verification, the store IC card 3 transmits a transfer completion notification to the customer IC card 2. In reply to this transfer completion notification, the customer IC card 2 deletes the coupon information of interest in the coupon storage area 44 in step S1232 to complete the transfer. Thereafter the customer IC card 2 shifts to the command waiting state shown in step S1203.

### Step S853:

The store IC card 3 stores the collected coupon ticket in the collected coupon ticket area 714 shown in FIG. 8 together with the date of use and the used shop code. Thereafter the store IC card 3 informs the controller 17 of the POS terminal 1 through the store IC card reader/writer 20a that the coupon ticket transfer is completed, and then returns to the command waiting state shown in S803 of FIG. 9.

### [Winning ticket processing]

In steps S820 to S827 of FIG. 10, there is illustrated a flowchart of the store IC card 3 in regard to winning ticket processing step S210 in the flowchart of the POS terminal 1 shown in FIG. 3. Also a flowchart of the customer IC card 2 in regard to the above-mentioned processing step is illustrated in steps S1220 to S1224 shown in FIG. 14.

### Steps S820, S1220, S1221:

In step S210 of the POS terminal 1, the winning ticket processing is commissioned to the store IC card 3. Responding to this commision, the store IC card 3 shifts to step S820 from the command-waiting step S603. Step S820 is a mutual authentication step between the IC cards, which is mentioned earlier and therefore explanation is omitted here. Also, in reply to this, the customer IC card 2 performs the mutual authentication processing in step S1220. Furthermore, the customer IC card 2 checks the access right 5 in regard to the opposite IC card using the aforementioned access right table in step S1221.

### Steps S821, S1222:

When the mutual authentication is completed successfully, the store IC card 3 performs winning ticket read-in and collection processing in step S821. More specifically, the store IC card 3 issues a lot/betting ticket read command to the customer IC card 2. In reply to this, in step S1222, the customer IC card 2 reads the lot information and the ticket information stored in the memory area 43 shown in FIG. 5, and transmits to the store IC card 3. At this time, electronic signatures respectively attached to the lot and the ticket are also transmitted. As for information for transmission, enhanced security is considered against wiretapping or forgery. For example, as mentioned earlier, entire information or a portion of information is encrypted using an encryption key, or otherwise the entire information or a portion of information is encrypted using an encryption key to be added to the entire information for transmission. When such secured communication is made, procedure necessary for decrypting is inserted in each side of transmission and reception, needless to say.

### Steps S822, S823:

In step S822, the store IC card 3 extracts winning tickets out of lots or betting tickets received from the customer IC card 2. Namely, the store IC card 3 compares the relevant information in received lots or tickets with the winning lot number or the winning betting ticket stored in the winning ticket table 709 of the store IC card 3. As for the lottery, a lot having the lot number, the date of issue, and the issue shop coincident with these of the winning ticket is extracted. In step S823, in regard to the extracted lot, the electronic signature attached to the lot concerned is compared with the electronic signature stored in the table 709 to verify the lot concerned is an authorized ticket.

Also, as for the betting ticket, in step S822, it is confirmed whether or not the date of bet in the received ticket falls within the specified betting period stored in the table 709. First any ticket falling within the betting period are extracted, and then the winning ticket is extracted by comparing the winning ticket number stored in the table 709 with the ticket number extracted above, which falls within the betting period.

Next, the number of bets having the winning number is read out of the data received from the customer IC card 2. Also, the refund amount for each betting unit is read from the table 709 and the total refund is calculated for the winning ticket stored in the customer IC card 2. The information mentioned above is temporarily stored in the volatile memory 64 of the store IC card 3.

Thereafter, in step S823, the electronic signature in the betting ticket of interest being received from the customer IC card 2 is compared with the electronic signature of the winning ticket stored in the table 709 shown in FIG. 8, so as to verify the ticket of interest is an authorized ticket or not.

### Steps S824, S1223:

When the winning ticket extraction is completed, the residual ticket data are returned to the customer IC card 2. In step S824, the store IC card 3 transfers the entire ticket data to the customer IC card 2 except for the winning ticket for the lottery being held some other day. Needless to say, the encryption processing such as mentioned earlier is carried out in this transfer.

In this step S1223, the customer IC card 2 decrypts the information in the received lots or betting tickets and compares with the electronic signature for each ticket, which is still stored in the own memory. As a result of this comparison, when each of these lots or tickets is verified as an authorized ticket, the information of the entire lots/betting tickets having been previously stored is replaced with the information of the entire lots / betting tickets received this time. Accordingly, the entire service ticket information except for the winning ticket, including the electronic signature for each ticket, is newly stored in area 43 of the customer IC card 2 shown in FIG. 5. At this moment, the lot/betting ticket information stored in the customer IC card 2 is the information in which the winning ticket information is excluded.

In addition, the electronic signature for each ticket is stored in the area being managed differently from other information of the lots/betting tickets in order to manage security. More specifically, as may be apparent from the access right table 46 shown in FIG. 6, electronic signatures are stored in the area possible to read or update when the opposite communication party is an the IC card only, that is, not accessible from other equipment. Meanwhile, general information such as a ticket number and the date of issue is stored in areas accessible from any equipment if only a certain condition is met. Therefore, in this step S1223, the customer IC card 2 stores each information and electronic signature in a different storage area.

### Step S1224:

On completion of storing the lot/betting ticket information and the electronic signature therefor, the customer IC card 2 outputs to the store IC card 3 a reception confirmation indicating the reception of the entire information.

### Steps S825, S826:

The store IC card 3, on completion of the reception confirmation command, shifts to step S825 because of recognizing the winning ticket transfer is completed. In step S825, the store IC card 3 notifies the controller 17 in the POS terminal 1 of the refund amount and the service information having been stored in the volatile memory 64 of the store IC card 3. Thereafter, in step S826, the store IC card 3 transmits a commissioned processing completion notification back to the controller 17 of the POS terminal 1. Thus the winning ticket processing commissioned to the store IC card 3 is completed. The process is then return to the command waiting state in step S803 shown in FIG. 9.

### [Coupon ticket collection processing]

In FIG. 3, the POS terminal 1 commissions in step S208 a coupon ticket collection processing to the store IC card 3. Here, the POS terminal 1 notifies the store IC card 3 of the coupon ticket information, that is, the commodity code concerned. The commissioned processing is performed both in steps S850 to S853 in the flowchart of the store IC card 3 shown in FIG. 11, and in steps S1230 to S1234 in the flowchart of the customer IC card 2 shown in FIG. 14.

### Steps S850, S1230, S1231:

These steps S850, S1230 are the steps for mutual authentication which are similar to the steps mentioned before, and therefore the explanation is omitted. Step 1231 in the customer IC card 2 is a step for verifying the access right for the opposite party. Similar to the step described before, it is verified in this step whether reading, writing and deleting are possible to the coupon information area.

### Steps S851, S1232, S1233:

On completion of the above-mentioned mutual authentication and the access right verification, in step S851, the store IC card 3 requests the customer IC card 2 to transfer the coupon ticket specified by the POS terminal 1. In reply to this, the customer IC card 2 reads out from the memory area of itself (area 44 shown in FIG. 5) the coupon ticket concerned and transfers to the store IC card 3. At this time, also the electronic signature corresponding to the coupon ticket concerned is transferred. Thereafter, in step S1233, the transferred coupon ticket is deleted from the memory area 44 (FIG. 5) in the customer IC card 2. Thus the coupon ticket transfer is completed.

### Steps S852, S853:

In step S851 shown in FIG. 11, the store IC card 3 receives the coupon ticket having an electronic signature from the customer IC card 2. In step S852, the store IC card 3 verifies the received electronic signature attached to the coupon ticket by comparing with the electronic signature owned by the store IC card 3.

As a result of this verification, if the electronic signature is proven to be authentic, in step S853, the store IC card 3 stores the received coupon ticket into the collected coupon ticket storage area 714 shown in FIG. 8. The coupon ticket information to store includes the received coupon ticket information, that is, the commodity code, the discount rate, the term of validity, the issue shop, and the electronic signature therefor. Further, the date of use of this coupon ticket and the use shop code are stored in this area 714. At this time, the store IC card 3 stores these information sets after classifying on a commodity code basis. For example, generally there are assigned continuous commodity code numbers for a plurality of commodities manufactured by a certain manufacturer. The store IC card 3 sorts in order of the commodity codes to store. On completion of this processing, the store IC card 3 notifies the POS terminal 1 of the commodity code of interest with the discount rate thereto. Thus the store IC card 3 completes coupon ticket processing and returns to the command waiting state of step S803 shown in FIG. 9.

### [Lottery issue processing]

In the flowchart of the POS terminal shown in FIG. 3, the POS terminal 1 commissions to issue lotteries or betting tickets to the store IC card 3 in step S213. The processing performed in the store IC card 3 regarding this lottery/betting ticket issue commissioning is shown in steps S810 to S818 of FIG. 9, and in steps S830 to S838 of FIG. 10. Also the processing performed in the customer IC card 2 is shown in steps S1210 to S1214 of FIG. 13.

### Step S810 (in FIG. 9), S1210 and S1211 (in FIG. 13):

Steps S810 and S1210 are the steps for mutual authentication between the IC cards, which are similar to the steps mentioned before. Therefore the explanation is omitted here. In step 1211, the customer IC card 2 verifies the access right for the store IC card 3 intending to access the customer IC card 2. Namely, by referring to the access right table shown in FIG. 6, it is verified that the access is permitted free unless the customer IC card 2 is in the locked state, because this access relates to the access to the betting information area from the IC card.

### Steps S811, S812:

In step S811, on receipt of the issue commission from the POS terminal 1, the store IC card 3 calculates the number of issue N corresponding to the notified sales amount. Then, in step S812, the store IC card 3 checks that the resulting figure N is no less than natural number '1', and proceeds to the next step if the figure N is no less than '1', so as to issue N sheets of tickets. Here, when the figure N is less than 1, the process is shifted to the completion step S818.

### Steps S813 to S817, step S1212, S1213:

In these steps S813 to S817, the store IC card 3 issues N sheets of lottery the number N of which has been calculated in the previous step S811.

More specifically, in step S813, the store IC card 3 refers to the table of issuable lot numbers/betting ticket item numbers 712 shown in FIG. 8. The store IC card 3 then reads out the lottery number and the electronic signature therefor using the smallest number in the lottery number range, and updates for the last field of the table 712.

In step S814, the store IC card 3 generates an electronic signature using the number and the electronic signature being read out. For this purpose, encryption is performed by means of the encryption logic having been mutually authenticated with the customer IC card 2. For this encryption, encryption key 706 shown in FIG. 8 is used. Thereafter, in step S815, the store IC card 3 transfers to the customer IC card 2 the lot number, the electronic signature and the electronic signature generated in the store IC card 3.

On completion of the transfer, in step S816, the store IC card 3 stores the transferred lot number, the date of issue, and the issue shop together with the electronic signature therefor into issued lot/betting ticket storage area 711 provided in the memory shown in FIG. 8.

In step S1212 shown in FIG. 13, the customer IC card 2 encrypts the lot number and the electronic signature therefor being extracted from the received information, using the encryption logic mutually authenticated and the encryption key owned in the customer IC card 2. The customer IC card 2 then checks whether or not this encrypted information coincides with the electronic signature added by the store IC card 3. If the electronic signature is proven to be authentic, in step S1213, the customer IC card 2 stores the lot number, together with the date of issue and the issue shop code, to the lot/betting ticket information area 43 shown in FIG. 5. Further, the electronic signature having been read out from the table in the store IC card 3 is stored in an area being protected from external accesses with the relation to the information such as the lot number.

Next, in step S817, the store IC card 3 determines whether or not the number of the issued lots reaches the number N having been calculated in step S811. If the number does not reach to N, the process returns back to step S813 and the step is repeated.

### Steps S818, S1214:

In step S817, when the number of issued lots reaches to N, the store IC card 3 issues an issue completion notification to the customer IC card 2 in step S818. In reply to this, the customer IC card 2 outputs a storage completion notification to the store IC card 3 in step S1214 when the entire information is received and stored, as storage completion processing. Thus the issue processing is completed on the customer IC card 2. Meanwhile, in step S818, after receiving the storage completion notification, the store IC card 3 transmits an issue completion notification to the controller 17 in the POS terminal 1. Thus the store IC card 3 completes the lottery issue processing and returns to the command waiting state in step S803.

### [Betting ticket issue processing]

When the commissioning of betting ticket issue processing is made from the POS terminal 1 to the store IC card 3, the store IC card 3 performs steps S830 to S838 shown in FIG. 10. Also, the customer IC card 2 performs steps S1210 to S1214 in FIG. 13. Thus the betting ticket issue processing is performed. Here, the processing performed in the customer IC card 2 is the same as the lottery processing explained above. Accordingly the explanation on the processing in the customer IC card 2 is omitted. The processing performed in the store IC card 3 is explained hereafter.

### Step S830:

In this step S830, the store IC card 3 performs mutual authentication with the customer IC card 2. This authentication is the same as the aforementioned processing and therefore explanation is omitted.

### Step S831:

In this step S831, the store IC card 3 calculates the number of bets permitted N by dividing the sales amount already discounted, which is transmitted from the POS terminal 1, by a predetermined criterion amount. For example, assuming the transmitted amount is ¥30,000 and the criterion is ¥1,000, then the number of bets permitted becomes 30.

### Step S832:

The store IC card 3 reads out the betting item numbers for the bet by referring to the table of issuable lot numbers/betting item numbers 712. The store IC card 3 then orders the customer input pad 20 to display the calculated number of bets permitted and the betting item numbers for the bet. In reply to this, in step S833, the customer input pad 20 displays onto the indicator 20c the number of bets permitted and the betting item numbers for the bet. Based on this indication, a purchaser inputs betting numbers and the number of bets using the keypad 20b.

The betting numbers and the number of bets having been input is displayed onto the indicator 20c, and at the same time the remainder number of bets is displayed by the customer input pad 20. When the entire number of bets have been input, the customer input pad 20 transfers each betting number and each number of bets thereof to the store IC card 3.

### Steps S834, S835:

In step S834, the store IC card 3 receives the above-mentioned information sets. The store IC card 3 then generates, in step S835, betting information on a betting number basis. More specifically, this betting information includes betting number, the number of bets being bet to the betting number, date of issue, code number uniquely assigned to each store IC card 3, and electronic signature being generated using the sequence number of the betting ticket with a predetermined arithmetic operation. In regard to this electronic signature, it is not always necessary to apply encrypting by means of encryption logic for use in mutual authentication or encryption key for the store IC card 3. It may be possible to use a simple and predetermined combination of adding, subtracting, multiplying and dividing operations. When refund is carried out, the electronic signature of the betting ticket being refunded is recorded. On refunding to another person, this electronic signature is compared with the electronic signature attached to the ticket owned by the other person to check whether these numbers are duplicated. In such a manner, it becomes possible to avoid refunding twice for a single ticket having the same betting number. Furthermore, by decrypting the electronic signature of the betting ticket, it is checked whether the identical information sets to the betting information, that is, the betting number, the number of bets, the code of the store IC card, the date of issue, and the sequence number are regenerated. In such a manner, forgery of betting ticket can be prevented.

### Steps S836, S837, S838:

In step S836, the store IC card 3 stores the betting ticket information generated in the above-mentioned step S835, or the betting information and the electronic signature, into the storage area 711 shown in FIG. 8. In step S837, the store IC card 3 transfers the betting ticket information having been stored to the customer IC card 2. When the transfer of the entire information is completed and the storage completion notification is received from the customer IC card 2, in step S838, the store IC card 3 notifies the POS terminal 1 of commissioned processing completion. The store IC card 3 then returns to the command waiting state in step S803.

### [New coupon ticket issue processing]

In step S214 of the flowchart shown in FIG. 3, the POS terminal 1 commissions the store IC card 3 to issue a coupon ticket when there is a commodity among purchased commodities to which a coupon ticket is to be issued. The store IC card 3 performs ticket issue processing through steps S840 to S843 shown in FIG. 11. Also, the customer IC card 2 performs ticket issue processing through steps S1210 to S1214 shown in FIG. 13. These steps S1210 to S1214 has already been explained in the aforementioned the lottery issue processing. This processing for the coupon ticket issue is identical to the processing for the lottery issue except for the storage area and the access right verification area to specify. Through these steps a coupon ticket is stored in the coupon ticket area 44 of the customer IC card 2 shown in FIG. 5. Accordingly the explanation on the processing of the customer IC card 2 is omitted.

### Step S840:

This step S840 performs mutual authentication between the IC cards, which is described earlier, and therefore the explanation is omitted.

### Step S841:

In step S841, the store IC card 3 retrieves in the coupon ticket commodity table 713 shown in FIG. 8 to search the coupon information corresponding to the commodity code notified from the POS terminal 1. The store IC card 3 then reads out the applicable coupon information, more specifically, the information sets related to the applicable coupon ticket including; a commodity code which will become an object for discounting in the next transaction opportunity, in other words a commodity code to which an coupon ticket is applicable (hereinafter referred to as coupon-issuing commodity code); discount rate; and a pre-assigned electronic signature.

### Step S842:

In this step S842, the store IC card 3 generates a new electronic signature, which is obtained by performing a predetermined combination of addition, subtraction, multiple and division operations on coupon-issued commodity code having been read out, the discount rate, the electronic signature, the date of issue, the identification code assigned to the store IC card 3, and the sequence number of the coupon ticket.

### Step S843:

In step S843, the store IC card 3 stores the above-mentioned coupon ticket information sets into the issued coupon ticket storage area 715 in the memory 65 shown in FIG. 8. The store IC card 3 then transfers these information sets to the customer IC card 2. Thereafter, when the transfer is completed and a storage completion notification is received from the customer IC card 2, the store IC card 3 issues a commissioned processing completion notification to the controller 17 in the POS terminal 1. The store IC card 3 then returns to the command waiting state in step S803.

### [Readout processing of coupon ticket commodity table]

In step S222 of the setting mode shown in FIG. 3, the POS terminal 1 performs processing of reading out commodity codes to which coupon tickets are to be issued. A flowchart performed in the store IC card 3 corresponding to the above processing is illustrated as step S860 shown in FIG. 11.

In this step S860, on receipt of a readout command from the POS terminal 1, the store IC card 3 accesses the coupon ticket commodity table 713 to read out a commodity code therein. The store IC card 3 then transfers the commodity code to the POS terminal 1, and completes the processing to return to the command waiting state in step S803.

### [Advertisement area writing processing for the customer IC card]

In step S215 shown in FIG. 3, the POS terminal 1 performs processing of writing advertisement information into the customer IC card 2. Corresponding to this processing, in steps S1240 to S1243 shown in FIG. 14, there is illustrated a flowchart of the processing to be performed in the customer IC card 2.

First, in step S1240, on receipt of the advertisement information writing command from POS terminal 1, the customer IC card 2 checks the access right table 46 shown in FIG. 6. The customer IC card 2 then, in step S1241, notifies POS terminal 1 of the storage area, for example, addresses to which information can be written, or more specifically, the top address and the size to which information can be written.

In reply to this, advertisement information is transferred from the POS terminal 1. In step S1242, the customer IC card 2 receives the information and stores it into the advertisement area 45 sequentially. And in completion of the final data reception, the customer IC card 2 transmits a reception completion notification to the POS terminal 1. Thus the processing is completed and the procedure returns to a command waiting state in step S1203.

### [Balance indicator]

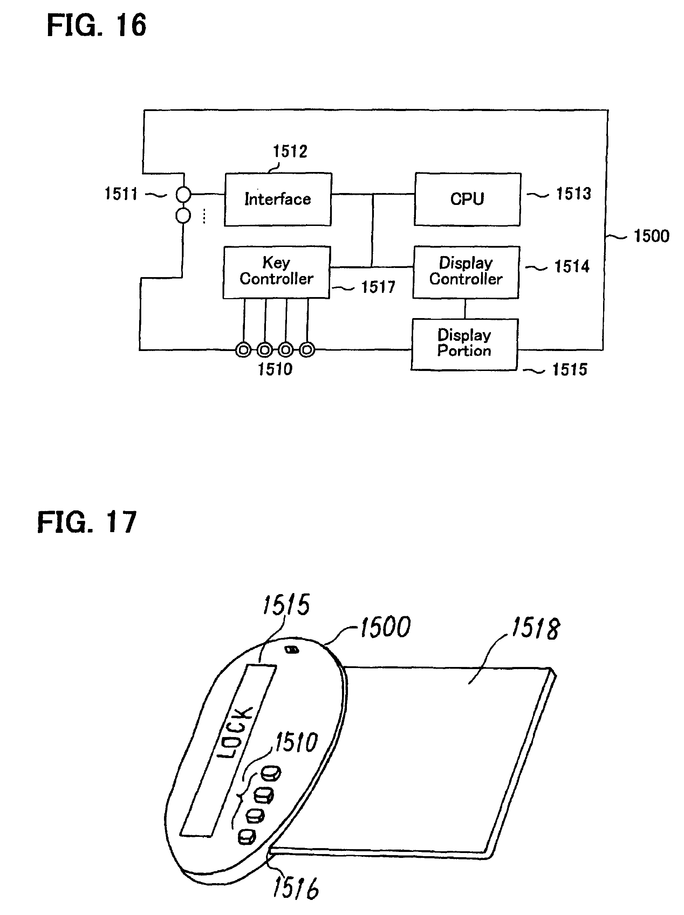

As mentioned earlier, there is provided a display unit for an IC card, being referred to as a balance indicator, so that customers can easily to view any kind of information stored in the IC card 2 or 3. In FIG. 16, a configuration diagram of the balance indicator is shown. In FIG. 17, a perspective view thereof is shown. The identical numerals between these figures refer to the identical parts.

In these figures, 1500 is an indicator, 1511 is a set of electrical contacts to connect to IC card terminals, 1510 is a key, 1517 is a key controller, 1512 is an interface circuit, 1513 is a microcomputer, 1514 is a display control circuit, and 1515 is a display portion.

Further, in FIG. 17, 1518 is an IC card. This figure illustrates an inserted condition of the IC card 1518. The display portion 1515 can display ten digit letters, which is formed of liquid crystal display (LCD) unit or the like. There are provided three to six keys in key 1511. With the combination of these keys, inputting data or specifying a mode is enabled. The contact 1511 is provided inside a card inlet 1516 shown in FIG. 17. When either customer IC card or shop IC card is inserted, the contact 1511 is electrically contacted to each contact point of the IC card 1518, enabling to interchange information. The indicator 1500 is portable in size, having approximately 30 mm x 50 mm x 5 mm.

Information interchange between the indicator 1500 and the IC card 1518 is illustrated in a flowchart of the customer IC card shown in FIG. 15. Hereafter the processing is explained based on this FIG. 15.

As shown in FIG. 17, when the IC card 1518 is inserted to the indicator 1500, the IC card 1518 performs mutual authentication between CPU 1513, as well as identification of connected equipment, through the contacts 1510 and the interface circuit 1512 provided in the indicator 1500. This processing is performed in the aforementioned first two steps S1201, S1202 shown in FIG. 13.

### Step S1250 (in FIG. 15):

In this step S1250, the IC card 1518 checks the access right of the indicator 1500. As shown in the access right table of FIG. 6, in the case of the indicator 1500, accessing the electronic signature area is inhibited, and in regard to the other areas only reading is permitted. In addition, when the IC card 1518 stays in the lock condition, it is not possible for the indicator 1500 to access electronic wallet data area and lot/betting information area unless PIN identification is not completed. This access right table is read into a non-illustrated work area inside the IC card.

### Step S1251:

In this step, the IC card 1518 checks whether or not the IC card itself is situated in the lock condition. When the IC card is in the lock condition, a message being in the lock condition is notified to the indicator 1500 and the process is shifted to step S1251. On the other hand, the process proceeds to step S1253 when the IC card is in the unlock condition. The indicator 1500 receives this condition information to display onto the display portion 1515 the lock condition, for example, "LOCK".

### Step S1251:

When the IC card 1518 is in the lock condition, the customer operates the key 1510 of the indicator 1500 to input the personal identification number (PIN). For example, when a key among the key 1511 is depressed for certain times to input the first digit of PIN, CPU 1513 increments a counter value corresponding to each key input. When another key is depressed, the figure in the counter is registered in a non-illustrated internal memory as the first digit of the identification number. The above procedure is repeated for the number of digits of the identification number. Depressing another key being used in the above procedure twice in succession specifies completion of the identification number input. To implement this inputting method, the key input control function widely used in portable telephone sets and other portable devices is applicable. The identification number thus input using the control method described above is transferred from CPU 1513 to the IC card 1518 shown in FIG. 16. In step S1252, the IC card 1518 compares the identification number stored in the IC card 1518 itself with the identification number having been input. If these two numbers match, then the process proceeds to the readout processing step S1253.

In the readout-processing step S1253, first, the IC card 1518 reads out a balance stored in the electronic wallet area 42 shown in FIG. 5, and supplies to the indicator 1500 shown in FIG. 17. The indicator 1500 displays the balance onto the display portion 1515. The operator of the indicator 1500 switches from the balance display condition to the condition for other information display using two keys among the key 1511 shown in FIG. 17. In FIG. 15, these keys are shown as keys 'A' and 'B' tentatively.

In the balance display condition, when key 'A' is depressed, this order is notified from the indicator 1500 to the IC card 1518. Triggered by this order, the process is shifted to step S1254, in which the IC card 1518 advances an address to read out the first transaction record in the area having the transaction record information of the electronic wallet area 42 shown in FIG. 5. This transaction record is supplied to the indicator 1500 and is displayed onto the display portion 1515. Next, when the key is depressed again and the IC card 1518 receives this signal, the succeeding transaction record is read out. Display information on the transaction record is supplied to the indicator 1500 so as to display in a similar manner by switching over from the previous display. Such procedure is repeated whenever key 'A' is depressed. While the final transaction record is displayed, depressing key 'A' initiates to supply the balance stored in the balance area to the indicator 1500.

When key 'B' is depressed at this time, an order corresponding to key 'B' is supplied to the IC card 1518 to start to perform step S1255.

In this step S1255, the first ticket information is read out from lot/betting ticket area in the IC card 1518, and is supplied to the indicator 1500 to display the information on a single ticket or lot. At this time, the IC card 1518 supplies information excluding the electronic signature area shown in FIG. 5 to the indicator 1500 to display. Now, if the operator depresses key 'A', the process is shifted to step S1257 to read out the succeeding ticket information. By depressing key 'A' one after another, each ticket information stored in the lot/betting ticket information area 43 shown in FIG. 5 successively to supply to the indicator 1500 to display.

Meanwhile, if key 'B' is depressed, the process is shifted to step S1258. In the aforementioned step S1252, the process is shifted to step S1258 even when the personal identification number does not match, so that the advertisement area is displayed.

In step S1258, the information stored in the advertisement area 45 shown in FIG. 5 is read out. This information is supplied to the indicator 1500 so that the advertisement information for a line is displayed. In step S1258, advertisement area 45 in the IC card 1518 is successively read out whenever key 'A' is depressed in order of the stored addresses of the advertisement message, and read information is supplied to the indicator 1500 to display. Accordingly, even in case the advertisement is formed of a long message, the message segment is read out one by one in sequence by repeated depression of key 'A', and thus the entire message can be displayed on the display portion 1515 of the indicator 1500.

At this stage, when the key 'B' is depressed, the IC card 1518 proceeds to step S1259 for displaying the coupon ticket information. In step S1259, also in case of reading out coupon ticket, the IC card 1518 reads out the coupon ticket area 44 from the first coupon ticket information and supplies to the indicator 1500. Here, in a similar manner to the case of reading out the electronic wallet area and the lot/betting ticket information area, the electronic signature is not read out. Only the information being able to open publicly is read to transfer to the indicator 1500. The display portion 1515 as shown in Fig. 17 displays the information.

Here, if each time key 'A' is depressed, in step S1260, the coupon ticket information stored next is displayed onto the display portion 1515.

Now, if the operator depresses key 'B', the IC card 1518 proceeds to step S1261. In this step S1261, whether the condition is the lock condition is checked. If being not in the lock condition, the process returns to the readout step of electronic wallet area in step S1253. If, on the other hand, being in the lock condition, the personal identification number is checked as in the case of step S1252. If the personal identification number matches, the process returns to step S1253 in which the electronic wallet area is read out. If the personal identification number does not match, the process is shifted to step S1258 to read the advertisement information. The above procedure is repeated thereafter.

According to the indicator 1500 of the present invention, the contents of the IC card can be confirmed. Because the electronic signature portion is not visual, duplication or forgery of a ticket based on the displayed lot/betting ticket information is not possible. From the viewpoint of a shop, it becomes advantageous to display advertisement messages to customer indicators.

### · · IC card connection apparatus · ·

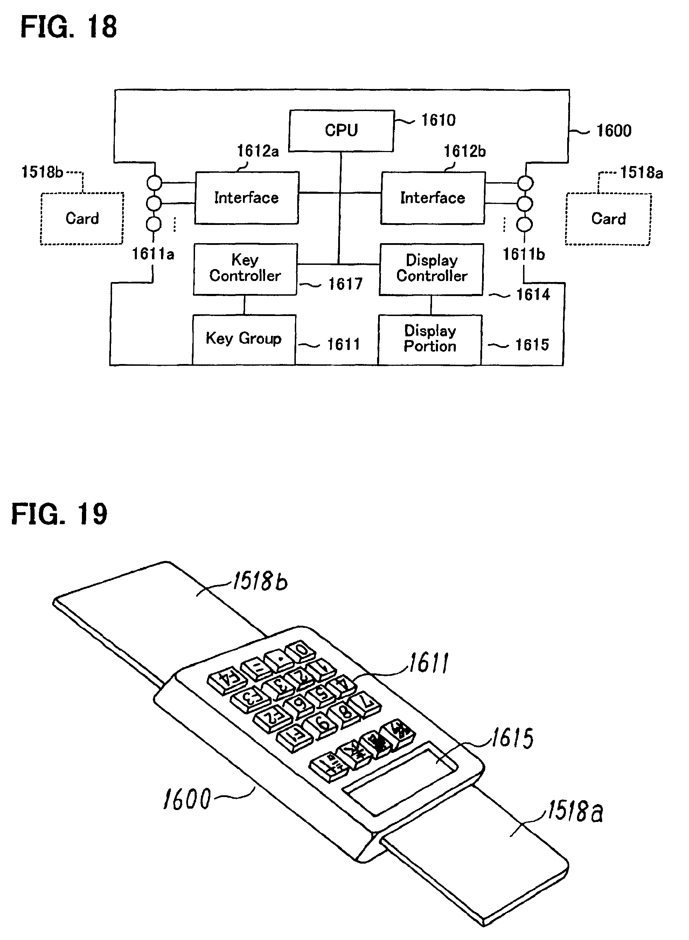

According to the present invention, coupon ticket, lot, and betting ticket can be transferred between the customer IC cards. A connection apparatus shown in FIGS. 18, 19 carries out this transfer.

FIG. 18 shows a block diagram of the connection apparatus, and FIG. 19 shows a perspective view of the connection apparatus.

As shown in FIG. 19, 1518a and 1518b denotes the customer IC cards, which are IC cards respectively owned by different customers. The connection apparatus 1600 has a size similar to a portable calculator, for example in order of 70 mm in width, 110 mm in length and 10 mm in thickness. Through a predetermined operation, electronic cash, coupon ticket, lot, and betting ticket can be transferred for one IC card 1518a to another IC card 1518b.

In FIGS. 18, 19, identical numerals refer to identical parts. In these figures, 1610 is a microprocessor including an embedded memory, and 1611a and 1611b are contact points for contacting electrically to the contacts of IC cards 1518a and 1518b, enabling information interchange between the IC cards and microprocessor 1610. 1612a and 1612b are interface circuits for the IC cards being connected to the contact points. 1611 is a keyboard including numeric keys and other function keys.

Portion 1617 is a keyboard control circuit, 1615 is an indicator, and 1614 is a display control circuit for indicator 1615. FIG. 19 illustrates a perspective view of a state in which IC cards 1518a and 1518b are inserted into two slots, an upper slot and a lower slot, provided in the connection apparatus 1600, making it possible to perform information interchange.

Hereinafter, an operation of connection apparatus 1600 is illustrated referring to FIGS. 13, 14, in which processing flowcharts of the customer IC card are shown.

When each IC card 1518a, 1518b is inserted in the slot of connection apparatus 1600, processing shown in FIG. 13 is started in each IC card. More specifically, as mentioned earlier, it is verified whether the equipment being connected is authorized equipment in step S1201. Next, in step S1202, it is checked what is equipment being connected to.

In this case, the connection equipment is connection apparatus 1600, and therefore the process is shifted into the command waiting condition S1203. In FIG. 18, this information is received by the microcomputer 1610 through each interface circuit 1612a, 1612b and the process proceeds in a time-sharing manner. When both IC cards fall in S1203, or the command waiting condition, the microcomputer 1610 in the connection apparatus 1600 orders the indicator 1615 through the display control circuit 1614 to display for requesting the operator to input a mode.

The owner of the connection apparatus 1600 selects a certain function from the function keys in key group 1611 to depress. When the owner wants to transfer electronic cash, lot, betting ticket, or coupon ticket between the IC cards, for example a key representing 'transfer' (hereinafter refers to as 'transfer' key) is depressed. Based on this, the microcomputer 1610 displays the kind of transfer object onto the indicator 1614. For example, 'electronic cash' is displayed first, and thereafter each time the 'transfer' key is depressed, the display is changed successively to 'lottery', 'betting ticket' and 'coupon ticket' to indicate any of the transfer object.

When the operator depresses an execution key, for example a key representing 'F4' while any of the transfer object is displayed shown above, the object to be transferred is identified. Namely, when the execution key is depressed during 'lottery' being represented, the microcomputer 1610 recognizes that the object to be transferred is the lottery.

The microcomputer 1610 then displays onto the indicator 1615 information necessary for determining a transfer source and a transfer destination. For example, the microcomputer 1610 first displays "From slot #1 to slot #2?" If the execution key is not depressed for a predetermined time, then the display information is changed to "From slot #2 to slot #1?". The microcomputer 1610 recognizes the transfer source and the transfer destination being specified by the operator by the information displayed on the indicator 1615 at the time the execution key in the key 1611 is depressed. Hereinafter, an exemplary case is described, in which a lot is transferred from the IC card 1518a to the IC card 1518b.

The microcomputer 1610 in the connection apparatus 1600 transfers a readout command in the lot area to the IC card 1518a through the interface circuit 1612b. On receipt of this command, the IC card 1518a verifies the access right, and then reads out the corresponding area, i.e. the lot information from lot/betting ticket information area 43 shown in FIG. 5, to transfer to the connection apparatus 1600. At this time, electronic signature area is not read out, but only information of each lot is read out. In FIG. 18, the microcomputer 1610 in the connection apparatus 1600 stores each transferred data successively into the internal memory thereof. Thereafter, information for a sheet of lot unit is displayed onto the indicator 1615 through the display controller 1614.

When the operator depresses the function key specifying 'next information request' among the key 1611, for example the key representing 'F1' (hereafter referred to as F1 key), the microcomputer 1610 recognizes the depression of F1 key based on a key depression signal from the key control circuit 1617, and displays onto the indicator 1615 the next lot information stored in the memory mentioned above. This is repeated each time when F1 key is depressed. When the operator identifies the lot to be transferred through the indicator 1615, the aforementioned execution key is depressed. The microcomputer 1610 recognizes depression of the execution key to identify the lot for transfer.

When the lot for transfer is determined, the microcomputer 1610 transmits a transfer command together with the lot number of interest to the IC card 1518a. Also, the microcomputer 1610 transmits a new lot storage processing command to the IC card 1518b. Depending on each received command from the microcomputer 1610, both IC card 1518a and IC card 1518b executes authentication between the IC cards to verify the access right. This procedure is identical to the transfer processing for tickets between the store IC card and the customer IC card. IC card 1518a as the transfer source reads out the lot information together with the electronic signature therefor now, and performs necessary encryption processing and electronic signature processing newly being required for the transfer, and then transmits to the IC card 1518b. The IC card 1518b verifies the received lot information and electronic signature and when the signature is proven to be authentic, a transfer completion notification is transmitted to the IC card 1518a. The IC card 1518b also stores the transferred lot information and electronic signature into the lot storage area of itself. Meanwhile, on reception of this transfer completion notification, the IC card 1518a deletes the lot information of interest stored in its own memory. Thus the entire transfer procedure is completed.

In the above description, the transfer object is lottery. The transfer of betting ticket and coupon ticket 5 is performed in a similar manner between the IC cards. In addition, when the IC card is in the locked condition, the state is verified at the stage prior to the transfer processing. The personal identification number (PIN) is input from key group 1611 and the PIN is verified within each card so as to unlock the locked condition for each IC card, needless to say.

### [Service ticket totaling and ticket issue management system]

The store IC card 3 stores service tickets issued in chain stores as well as collected service tickets after providing services of refunding, etc. Totaling equipment 9 performs service ticket settlement and other processing for the store IC card 3.

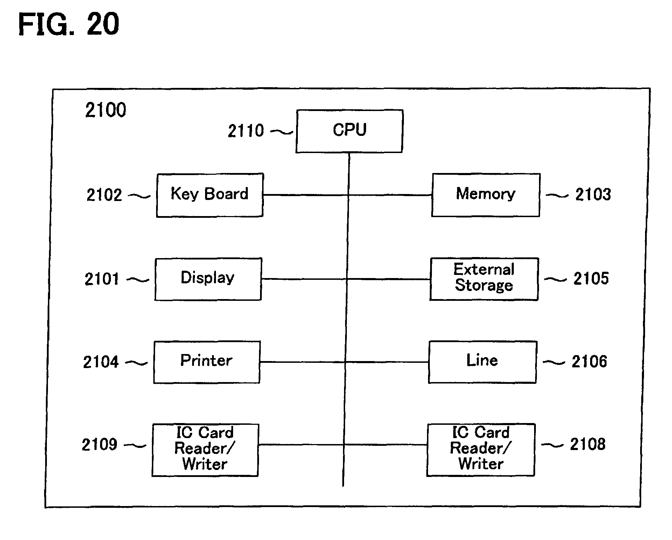

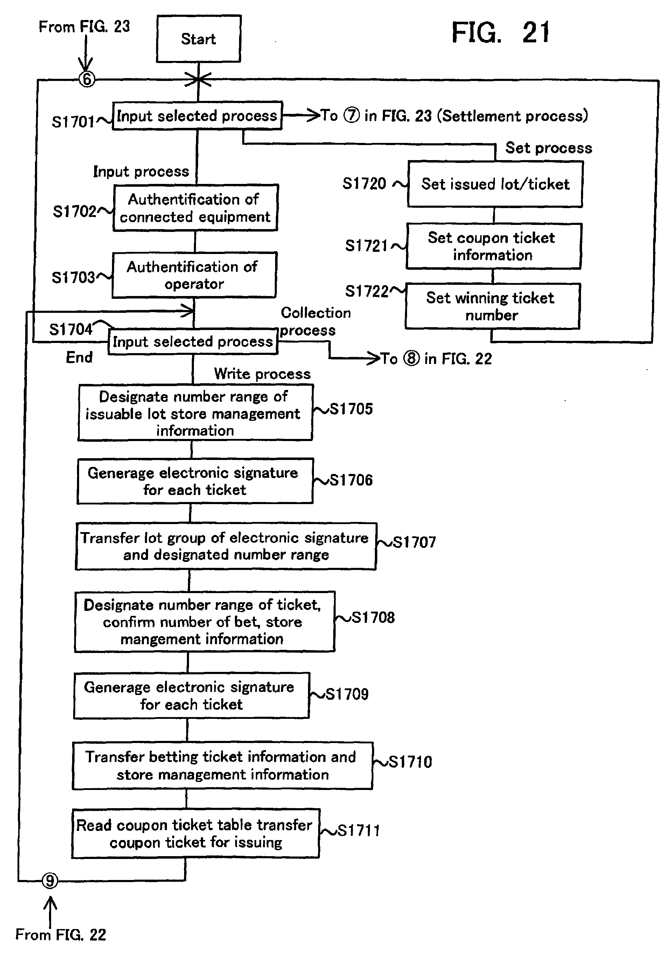

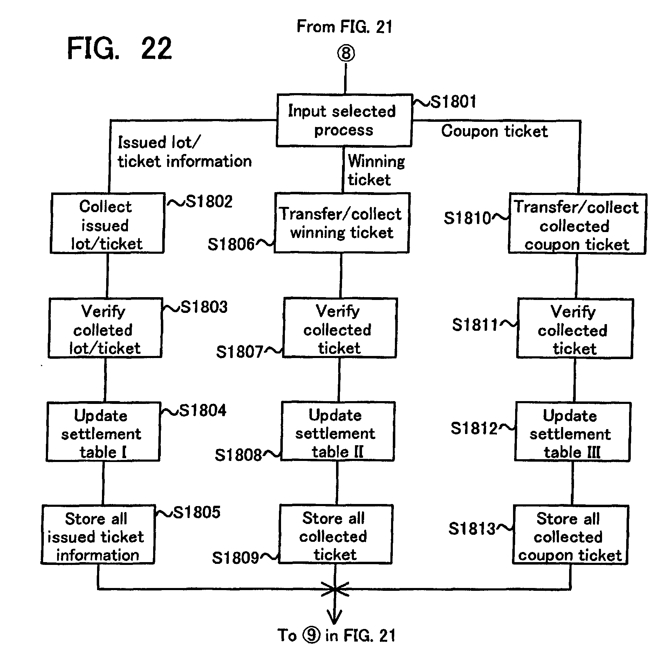

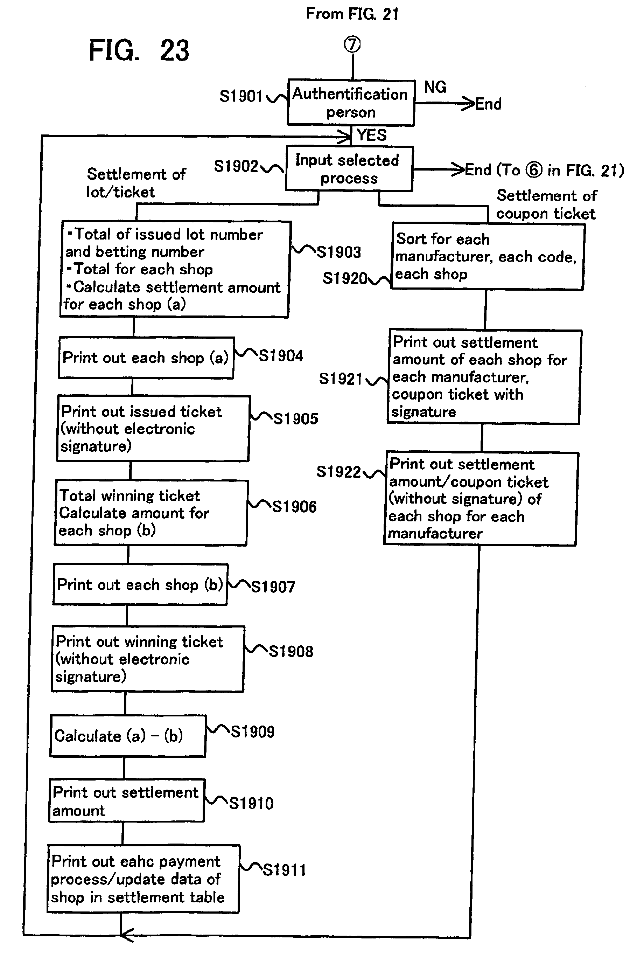

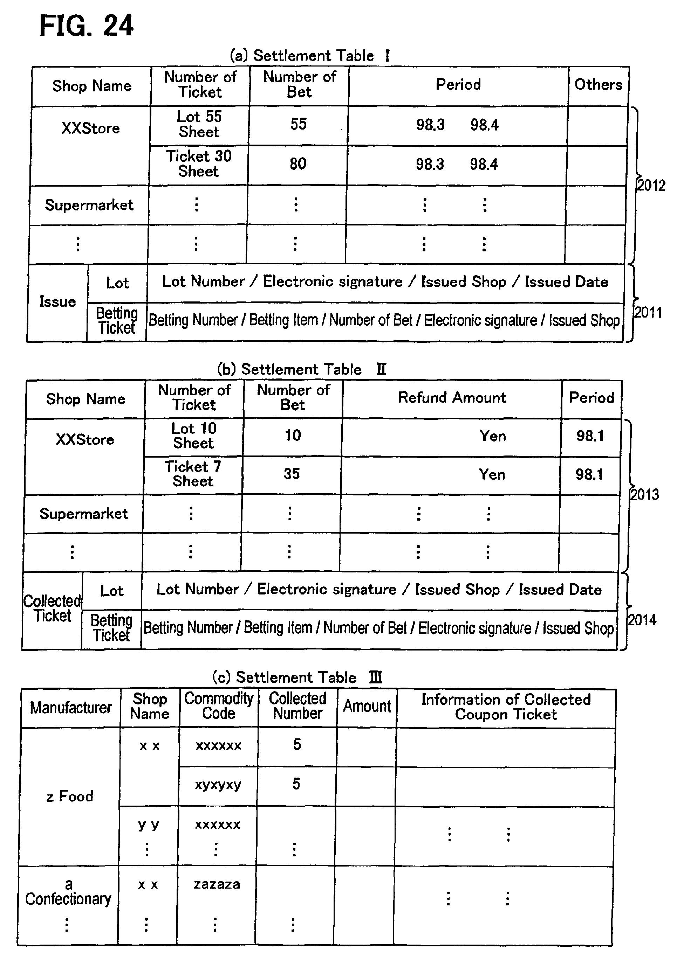

In FIG. 20, a hardware block diagram of the totaling (management) equipment is shown. Processing flowcharts of the totaling equipment are shown in FIGS. 21 to 23, and a table explanation diagram of the main portion thereof is shown in FIG. 24.

As shown in FIG. 20, totaling (management) equipment 2100 (which is shown as '9' in FIG. 1) is constituted by a general-purpose personal computer, namely microcomputer 2110, display unit 2101 such as a CRT display unit, keyboard 2102 for inputting characters, RAM memory 2103, printer 2104 such as a laser printer, external storage 2105 such as a hard disk drive, communication equipment 2106 such as a modem.

Further, the totaling equipment 2100 includes IC card reader/writer 2108 for accessing an IC card being used by a manager of the totaling equipment 2100 and an IC card reader/writer 2109 for accessing the store IC card 3.

The totaling equipment 2100 is installed at a secured location such as a bank, in which it is required to manage with a predetermined security criterion.

Hereafter, referring to processing flowcharts shown in FIGS. 21 to 23, a processing operation of the totaling equipment 2100 will be explained.

In FIG. 21, the totaling equipment 2100 first performs a processing selection/input step S1701 for selecting and inputting a desired processing. In this step, a selection menu is displayed on a screen of the display unit 2101 shown in FIG. 20 enabling to select either data setting processing, card accessing processing including data writing or service ticket transferring to a card, or ticket collecting and settling processing from each IC card. In reply to this, an operator selects the processing to be performed using keyboard 2102.

### (Setting processing)

In case the selected result specified by the keyboard 2102 is setting processing, the microcomputer 2110 proceeds to step S1720 shown in FIG. 21. Step S1720 is a step for inputting information on lotteries and tickets to be issued. In this step, in case of issue of lottery, the operator inputs whether or not lottery is carried out, what are the lot numbers to be issued (a top number and a final number), what should be the date of validity, when the drawing is to be carried out, what should be the service i.e. either gift, cash, or gift token. Meanwhile, in case of betting ticket, the operator inputs the number of digits for betting, the numbers (item numbers) allowed for inputting, ticket issue period, the range of numbers of betting tickets, the date of drawing, etc. The information having been set is stored in the external storage 2105 shown in FIG. 20.

When lottery/betting ticket setting processing S1720 shown in FIG. 21 is completed, or no lottery or betting ticket service to be performed is specified, the process proceeds to step S1721. In step S1721, coupon ticket information is set. As for coupon tickets, information written in documents delivered from manufactures is input from the keyboard 2102 shown in FIG. 20. For example, the information includes the commodities to which coupon tickets are to be issued, the commodity codes thereof, the commodity codes to which the coupon ticket is valid, the commodity codes to which coupon tickets have been issued, the discount rate, the date of validity, etc.

As mentioned above, it is allowed that the commodity represented on a coupon ticket sheet differs from the object commodity codes to which the coupon ticket is issued. In other words, it is possible to issue a coupon ticket of commodity A when commodity B is purchased. This can apply to a case for promoting sales of a new product by issuing a coupon ticket of the new product when a commodity having been on the market is purchased. It is also possible to issue a coupon ticket for commodity A when commodity A is purchased, in other words to issue a coupon ticket for the identical commodity to the purchased commodity. Therefore, when setting the coupon information, there may the cases that the purchased commodity code is either identical to or different from the commodity code written on a coupon ticket. For this reason it is necessary to specify by inputting information such as a commodity code as well as the discount rate and the date of validity to be applied to the commodity code written on the coupon ticket.

These setting information sets can be input from keyboard 2102. Though not shown in FIG. 20, it is also possible to input from a flexible disk having these information sets therein through a flexible disk drive additionally connected to the equipment.

On completion of this input, each input information is once stored into the memory 2103. After the entire input is completed and further at the time when an indication of input procedure completion is made from the keyboard 2102 using a completion key or the like, this information is transferred from the memory 2103 to the external storage 2105. Needless to say, also in the case of lottery/betting ticket such information is once stored into the memory 2103 and, on completion of the input procedure, the information is transferred to the external storage 2105 to store therein.

When the entire information is completed to store into the external storage 2105, the microcomputer 2100 proceeds to step S1722. Step S1722 is a step provided for setting data related to a winning ticket. In case the ticket is lottery, the drawing is made manually through a predetermined method based on the issued ticket numbers, to determine numbers of first prize, second prize and so forth on a prize-by-prize basis. Also, in case the ticket is betting ticket, the betting item having acquired the largest number of bets is obtained through totaling. This may be performed manually. Otherwise, the totaling may be performed using statistic information being obtained from a database produced through the collection processing, in which a personal computer and spread sheet software such as EXCEL (trade mark) may be applicable. The betting item acquiring the largest number is the winning betting item. The ticket numbers having been bet on the winning ticket are extracted from the totaled ticket numbers. This may also be performed manually. In either way, the winning ticket number as well as a variety of information on the winning ticket is input.

As already illustrated in FIG. 8, in case of lottery, there are input the lot number, the date of issue, the issue shop, and the electronic signature therefor are input to store into the external storage 2105. On completion of this processing, the microcomputer 2110 shown in FIG. 20 returns to processing selection/input step S1701 shown in FIG. 21.

### (Card access processing)

In processing selection/input step S1701, when the operator selects card access processing, the process proceeds to step S1702. Input processing requires processing with an IC card. Therefore, in step S1702, first an indication prompting the insertion of the store IC card 3 is output on the screen of display unit 2101. According to this indication, the operator inserts the store IC card 3 into the IC card reader/writer 2109. Thereby the connection equipment authentication is performed between the microcomputer 2110 and the inserted store IC card 3, which was previously described in the explanation of the POS terminal 1, to verify whether an authorized IC card is inserted, as well as whether authorized equipment accesses the IC card.

When the verification to access the authorized card by the authorized equipment is confirmed, the process proceeds to step S1703. Step S1703 is provided for authenticating the operator by the microcomputer 2110. Namely, the microcomputer 2110 checks whether or not the operator is an authorized person. For this purpose, the microcomputer 2110 requests the operator to input personal identification number (PIN) as well as the user identification code. The microcomputer 2110 then compares the PIN having been registered in the equipment with the input PIN, to identify the access right having been assigned to each user identification code. Thus the verification on whether or not the operator is permitted to access IC card is carried out.

If the verification is completed, the process proceeds to the next step S1704. This step S1704 is provided for selecting the processing triggered by the operator. In this step, either the processing of writing into IC card (steps S1705 to S1711) or the collection/transfer processing shown in FIG. 22 is selected. For this purpose, the selection items are displayed onto the display unit 2101, to input the desired processing item using the keyboard 2102 by the operator.

When the processing for writing into an IC card is selected, the microcomputer 2110 proceeds to step S1705 shown in FIG. 21.

### (write processing)

This processing step is a step of writing a variety of issuable service ticket information into the store IC card 3. A processing flowchart in the store IC card 3 is shown in FIG. 12.

### (1) Issuing a lottery

Step S1705 shown in FIG. 18 sets a range of issuable lot numbers. Here, the operator designates from the keyboard 2102 the range of lots assigned to the store IC card 3 of interest among the range of the entire lots to be issued having been set beforehand in step S1720. For this purpose, the microcomputer 2110 reads out from the external storage 2105 the relevant information already stored, and displays onto the display unit 2101. The operator looks at the lot and betting number range of lots/betting tickets which have not yet been issued from the displayed number range, and then inputs an arbitrary range of lot numbers to permit the issue of the ticket with the shop from the keyboard 2102. For this input operation, it may also be possible to designate using a non-illustrated pointing device such as a mouse which is either connected to keyboard 2102 or directly connected to microcomputer 2110. In reply to this input, the microcomputer 2110 writes a flag indicating the completion of issue, an issue shop code, and the date of issue for the designated number range on the database. Thus step S1705 is completed and the process proceeds to the next step S1706.

Step S1706 is provided for generating an electronic signature. The electronic signature is generated using the issue shop code, the ticket number and the date of issue being encrypted with predetermined encryption logic. This process is performed by the microcomputer 2110. Otherwise, to perform this encryption, it is also possible to use an LSI dedicatedly prepared for encryption (i.e. electronic signature generation) and verification, or a digital signal processor DSP.

The electronic signature generated on a ticket-by-ticket basis is added to the ticket information attached to each ticket, and then stored once into the memory 2103. Thereafter the relevant information set is stored into the external storage 2105 on a ticket-by-ticket basis as the issued ticket information in the logging information. Thus step S1706 is completed.

In other words, each lot has been generated here and is stored into the external storage 2105. This lot includes at least the lot number and the electronic signature, in which the electronic signature also includes at least the aforementioned issue shop code. After step S1706, the process proceeds to step S1707.

Step S1707 is a step in which a lot is transferred from the totaling equipment 2100 to the store IC card 3. In step S1707, the ticket information is transferred in a similar manner to the transfer procedure from the store IC card 3 to the customer IC card 2 which was explained earlier. Moreover, the range of issued numbers, the issue period, the terms of validity, etc. are added to transfer to the store IC card 3. On reception of the transfer completion notification from the store IC card 3, the process proceeds to the next step S1708.

The processing performed in the store IC card 3 during the procedure shown above is explained referring to FIG. 12. The store IC card 3 has performed the mutual authentication with the connection equipment beforehand. On receipt of a transfer command from the totaling equipment 2100, the store IC card 3 checks the access right of the equipment in step S1113 and confirms the additional storing operation into the memory is permitted. Next, in step S1114, by encrypting the information related to the received lot, the encryption data is obtained. The store IC card 3 then compares the encrypted data with the electronic signature having been generated by the totaling equipment and transmitted attached at the tail of the lot, to verify whether or not these information sets coincide each other. When the information sets coincide, each information set is stored in the related memory area of the store IC card 3 in the next step S1115. Also, each electronic signature attached to the ticket is stored into a secured memory area of the IC card 3, which cannot be accessed by particular equipment, corresponding to each ticket. Thus the transfer is completed.

The issued lots are successively stored up to the final lot. After the additional information such as the range of the issued numbers is also received, the IC card 3 transmits a completion notification to the totaling equipment 2100 in step S1116. Thus the processing is completed.

### (2) Issuing a betting ticket

Step S1708 is an initial step for issuing betting tickets. In step S1708, similar to the lottery, the entire range of the betting ticket issue is displayed onto the display unit 2101 shown in FIG. 20. The corresponding range is selected from the keyboard 2102 out of the displayed range. Each number of the selected number range is assigned from Number 1 to Number 1,000 on the assumption that the total number of tickets to be issued within a predetermined period is 1,000. Thus a single number is assigned to a single betting ticket. In such a manner, even when other person illegally duplicates the number trying to obtain the refund, it becomes possible to avoid refunding more than twice. On completion of designating the number range, the microcomputer 2110 displays onto the display screen 2101 a variety of conditions for betting, such as preset betting item numbers in the period concerned and the number of digits allowed for betting. When the execution key on the keyboard 2102 is depressed for confirmation, the issued number range, the issue source and the date of issue are stored into the memory. The procedure then proceeds to step S1709 shown in FIG. 21.

Step S1709 is a step in which betting ticket information is generated on a ticket-by-ticket basis. More specifically, in order of the number of the issue number range stored in the memory 2103 shown in FIG. 20, the ticket number, the issue source, the date of issue, and the issue destination are generated, and further the electronic signature are generated by these information. Information on a single ticket includes the generated electronic information (i.e., in case of betting ticket, the information excluding the betting item number and the number of bets) as well as the electronic signature. The entire information related to a single ticket is stored successively into the memory 2103. Thus the ticket information is generated ticket by ticket. When the ticket information for the entire tickets are generated and stored into the memory 2103, step S1709 shown in FIG. 21 is completed and the process proceeds to the next step S1710.

Step S1710 performs functions of transferring the information related to betting ticket to the IC card 3 and storing the issue management information in the totaling equipment 2100. In this step S1710, the microcomputer 2110 read out the information related to each ticket including electronic signature, the number range, the issue source, the date of issue and the term of validity being previously stored in the memory 2103. The microcomputer 2110 then transfers these information sets to the IC card reader/writer 2109 to transfer the ticket information to the IC card 3. Other attached information such as the number range, the betting item information such as item numbers for the betting, and the period issuable is transferred to the IC card 3. In FIG. 12, a processing flowchart performed by the IC card 3 is illustrated. In steps S1113 to S1116 shown in FIG. 12, the IC card 3 performs the transfer processing similar to the processing for lottery. In step S1116 shown in FIG. 12, when the totaling equipment 2100 receives the transfer reception completion notification from the IC card 3, the process proceeds to the next step S1117.

### (3) Issuing a coupon ticket

Step S1711 is a step for issuing a coupon ticket. In this step S1711, the microcomputer 2110 reads out from the external storage 2105 the entire information of the coupon tickets having been generated before, and transfers to the IC card 3 through the IC card reader/writer 2109. The IC card 3 receives this information in steps S1113 to S1116 mentioned earlier in FIG. 12, and verifies and stores into the corresponding area in the memory owned by itself. Thus the transfer is completed.

In FIG. 21, on completion of coupon ticket transfer, the processing in the totaling equipment returns to processing selection/input step S2704 as mentioned earlier. In other words the procedure enters into an input waiting condition to wait for the input of processing selection.

### (Collection transfer processing)

In this processing selection input step 1704 shown in FIG. 21, when the operator designates from the keyboard 2102 the collection processing, the totaling equipment 2100 proceeds a processing selection/input step S1801 shown in FIG. 22.

This step S1801 is provided for the operator to select the processing to be performed by designating either of the following three contents of processing: collection processing of lots and betting tickets having been issued by each shop; collection processing of the winning tickets; and collection processing of the collected coupon tickets. To enable this, in the totaling equipment 2100, the microcomputer 2110 displays the items representing respective processing onto the display unit 2101. The operator then uses the keyboard 2102 to select either of the items displayed. In reply to this, the microcomputer 2110 proceeds to the designated step.

### (1) Collection of issued lots and betting tickets

This step performs the processing of collecting the lots and betting tickets having been issued from the IC card 3 to the customer IC card 2, aiming to perform settlement.

The first step S1802 is the initial step for collecting issued lots and betting tickets including information for management. The necessary information for generating totaling table I shown in FIG. 24 (a) are obtained from the keyboard 2102 as well as the IC card 3 through the IC card reader/writer 2109.

More specifically, the microcomputer 2110 shown in FIG. 20 displays onto the display unit 2101 requesting for inputting the shop name of the IC card 3. For example, as shown in totaling table I, it is requested to input "xx shop" from the keyboard 2102. Otherwise, it is also possible to use the following method: the shop name and the code thereof are stored in advance into the external storage 2105 together with the address and the contact point, so that these information sets are read out from the external storage 2105, prior to the input, and are displayed onto the display unit 2101 for selecting the shop of interest using the keyboard 2102. Also, for the sake of examining an illegal conduct to be performed later, the information for identifying the person who brings the store IC card 3 of interest for the settlement is requested to input. For this purpose, the name of the person having the store IC card 3, or the identification code of the person, can be used. When the shop places the responsibility for the settlement on a shop clerk beforehand, it may also be possible to register the identification number of this clerk.

On completion of these inputs, the microcomputer 2110 transmits a collection command to the store IC card 3 through the IC card reader/writer 2109 to collect the information concerned. On receipt of this command, the IC card 3 verifies the access right and then read out the issued lots and issued betting ticket information from the area 711 mentioned earlier in FIG. 8, and sends to the totaling equipment 2100. In the totaling equipment 2100, the microcomputer 2110 expands the entire tickets (lots and betting tickets) once onto the memory 2103.

On completion of collecting the entire issued tickets, the tickets are verified in step S1803 shown in FIG. 22. Namely, whether each ticket is a ticket having been issued during the authorized period, and whether the electronic signature is authentic, to verify that the entire tickets are correctly issued.

On completion of this verification, in step S1804, the settlement processing is performed. Namely, the settlement is performed in a manner shown in settlement table I of FIG. 24 (a), as well as the information previously input. First the area of the shop of interest is read out and the number of issued ticket and the number of bets for each issue period are totaled into the area 2012 related to the shop shown in FIG. 24 (a). In FIG. 24 (a) there is an exemplary case having the number of lots is 55 sheets, the number of bets of the lots is also 55. Also regarding betting tickets, the number of tickets is 30 sheets, the number of bets is 80, being shown as an example. Here, the number of bets for the lottery is considered equal to the number of lots. These data are totaled by accumulating the information concerned after each ticket (including lot and betting ticket) is read out one by one from memory 2103 shown in FIG. 20. Finally, this total information is added to the information previously stored in each area of settlement table I, to update the settlement table I.

Next, the process proceeds to step S1805 for storing the logging information. The each ticket (lot and betting ticket) information expanded on the memory 2103 is stored into the corresponding ticket area 2011 in settlement table I. Here, in regard to the person of settlement, i.e. the person who has brought this IC card 3 to the totaling equipment 2100 for settlement, the input information related to the person, such as the identification code, etc., is attached to each ticket (lot and betting ticket). On completion of the storing processing, the process returns to the processing selection step S1704 shown in FIG. 20.

### (2) Winning ticket transfer processing

In processing selection/input step S1801 shown in FIG. 22, when the winning ticket collection processing is designated, the totaling equipment 2100 shifts the procedure to step S1806 to complete the processing therefor.

Step S1806 is an initial step in which the collection of the winning ticket as well as a prior processing therefor is performed. To perform the winning ticket collection processing, the settlement table II shown in FIG. 24 (b) is used. This settlement table II has an area similar to that provided in settlement table I, namely a shop area 2013 having a storage area of the number of winning ticket (lots and betting tickets) and the number of bets, a storage area of the total of the refund amount and the refunded service fee, and a storage area of the refund period, etc., for each shop and a storage area 2014 for storing logging information on the collected and transferred lots and betting tickets. Further, in this logging information area 2014, there are stored not only the information on the collected tickets (lots and betting tickets), but also the date of settlement and the identification code of the person of settlement, etc. on a lot-by-lot basis. Therefore, in step S1806 shown in FIG. 22, the input processing for inputting the above-mentioned information is provided. In this step S1806, the microcomputer 2110 displays onto the display unit 2101 the items to be input so as to request for inputting necessary information from the keyboard 2102. Needless to say, this information includes the shop identification code as well as the identification code of the person who came for settlement, similar to the aforementioned processing. The information input from the keyboard 2102 is expanded on the memory 2103 to store temporarily. After inputting the predetermined information set is completed, the microcomputer 2110 transmits a winning ticket transfer command to the IC card 3 through the IC card reader/writer 2109.

The IC card 3 verifies the access right of the totaling equipment 2100 being under accessing. When the equipment is identified that the winning ticket information is transferable thereto, the IC card 3 read out the winning ticket area, generate an electronic signature and transmit it. The information on the ticket transferred from the IC card 3 is once expanded onto the memory 2103. On completion of collecting the entire winning tickets, the process proceeds to step S1807 for examining each collected ticket.

In step S1807 for examining lot, first the lot is examined using each received ticket and the transferred electronic signature attached to each ticket. Namely, the totaling equipment 2100 encrypts each ticket to generate electronic signature, as the same encryption procedure is performed in the IC card 3. The totaling equipment 2100 verifies whether the received electronic signature coincides with the electronic signature generated through the encryption by the totaling equipment 2100.

Next, it is checked whether the transferred ticket exists in the winning ticket information having been stored in the external storage 2105. When the collected ticket is a winning ticket, it is checked whether the electronic signature issued at the time of ticket issue can be regenerated from other information in the received ticket. Further, it is checked whether a ticket having an identical ticket number (i.e. either the lot number or the betting ticket number) exists in the area 2014 for storing the logging information of totaling table II shown in FIG. 24 (b). If there is a ticket having the identical number, the number is printed out on the printer 2104 shown in FIG. 20. Otherwise, if the identical number does not exist, data are totaled on a item-by-item basis in the totaling area 2013 of the totaling table II shown in FIG. 24 (b). Here, if the refund amount differs between the tickets, there are provided a table including ticket numbers and the refund amounts in the memory 2103 shown in FIG. 20, so that the totaling is performed by extracting the amount corresponding to each prize level from the ticket number. In case of betting ticket, the refund amount corresponding to the ticket is calculated from the ticket information. Namely, because a predetermined refund amount is set on a bet unit basis, the refund is obtained from the number of bets being multiplied by the corresponding refund amount. The result is totaled into an area for totaling the refund amount in the totaling table II shown in FIG. 24 (b). Meanwhile, each winning ticket (lot and betting ticket) is stored as logging information in the logging information storage area 2104 in the totaling table II shown in FIG. 24 (b).

On completion of this processing, the process proceeds to step S1808 shown in FIG. 22. Step S1808 is a step for updating the settlement table provided in the external storage 2105 shown in FIG. 20. The microcomputer 2110 updates the settlement table of interest in the external storage 2105 by the contents of the totaling table II having been generated in the memory 2103 in the aforementioned step S1808. Also with regard to the logging information, in step S1809 of Fig.22, the newly collected information is added into the settlement table stored in the external storage 2105. On completion of the entire collection transfer, the process returns to processing selection/input step S1704 shown in FIG. 21.

### (3) Coupon ticket collection processing

In processing selection/input step S1801 shown in FIG. 22, when coupon ticket collection is selected, the process is shifted to coupon ticket collection processing for the coupons stored in the IC card 3.

Step S1810 is a pre-processing step for collecting the coupon tickets. In FIG. 24 (c), settlement table III related to coupon ticket is shown. In the settlement table III, there are stored the information of the collection coupon ticket, the number of collection coupon tickets, the total amount of discount, and the logging information on the collection coupon tickets of each shop for each commodity manufacturer.

For this purpose, before collecting the tickets, the information input processing described above different from the coupon ticket information is performed. Namely, the microcomputer 2110 shown in FIG. 20 displays onto the display unit 2101 input items for guiding the operator to input. In reply to this the operator inputs the specified information from the keyboard 2102. The information having been input is stored into the memory 2103. On completion of inputting the information for the predetermined items, the microcomputer 2110 transmits a coupon ticket collection command to the IC card 3 through the IC card reader/writer 2109.

The IC card 3 then reads out the collected coupon tickets from the memory area 714 shown in FIG. 8, as described earlier, and transmits to the totaling equipment 2100 after generating an electronic signature. The totaling equipment 2100 receives the information through the IC card reader/writer 2109 and expands to the memory 2103 for storing temporarily. When the transfer is completed, the microcomputer 2110 performs a collected ticket verification step S1811 shown in FIG. 22.

The collected ticket verification step S1811 performs the procedure of generating an electronic signature for verification in the IC card 3 based on a variety of information related to coupon ticket. This procedure is similar to the procedure of electronic signature generation having been explained earlier. For the verification, the electronic signature generated above is compared with the electronic signature attached to each coupon ticket having been transmitted. Next, authenticity of the coupon ticket is verified by checking whether the ticket corresponds to the coupon ticket having been set before in the external storage 2105. when the verification for the entire coupon tickets is completed, the process proceeds to step S1812 shown in FIG. 22.

Step S1812 is a settlement-processing step. When this settlement processing is performed, the microcomputer 2110 reads out aforementioned settlement table III shown in FIG. 24 (c) from the external storage 2105. Thereafter each coupon ticket having been expanded in the memory 2103 is classified and totaled item by item to update.

At the same time, each information set on the transferred coupon ticket to the corresponding logging area is additionally stored. In step S1813, on completion of table update, the microcomputer 2110 copies each information updated in the memory to the external storage 2105 and thus the collection transfer is completed. Thereby the amount to be paid from each manufacturer is totaled on a manufacturer-by-manufacturer basis and on a collection shop-by-shop basis. Also the collected coupon tickets are stored into the external storage 2105. On completion of this processing, the procedure returns to processing selection/input step S1704. The microcomputer 2110 is shifted into an input waiting state to wait for the processing item being input from the keyboard 2102.

When the operator selects an item of input completion from the keyboard 2102, the microcomputer 2110 returns to step S1701 shown in FIG. 21.

### (Settlement processing)

In processing selection/input step S1701, when the operator specifies the settlement processing, the microcomputer 2100 proceeds to the settlement processing shown in FIG. 23. Because the settlement processing handles money transfer, it is required to perform strictly. For this purpose, first, step S1901 for authenticating the identity of the operator is provided.

Prior to performing step S1901, the identification code and PIN (personal identification number) of the operator is stored into the external storage 2105. When performing step S1901, the step requests the operator to input the PIN and verifies whether or not the input PIN agrees with the stored PIN. If this results in disagreement, the processing returns to processing selection/input step S1701 shown in FIG. 21.

Here, in the personal authentication step S1901, the identification code information of the operator is stored beforehand in the external storage. Otherwise, it is also possible to memorize this information into an IC card being carried by a specially authorized person, such as a manager being responsible for the chain stores, so as to verify the operator using this IC card. According to this method, the IC card reader/writer 2108 shown in FIG. 20 is used further to access to the IC card of the operator concerned. When the operator is verified to be an authorized person, the process proceeds to a processing selection/input step S1902 shown in FIG 23.

In step S1902, the totaling equipment 2100 displays items for selection to the display unit 2101 in a similar manner to that mentioned earlier, to request the operator to input a processing item from keyboard 2102. When the specified item input from the keyboard 2102 is the lot/betting ticket settlement, the process proceeds to step S1903.

### (1) Lot/betting ticket settlement

Step S1903 is a step of cost calculation which has been shared by each shop corresponding to the number of issued lots and betting tickets. This processing is carried out at the location of an administration association or the like in which the totaling equipment is installed when the period concerned is to close. For example, the processing is performed on the first day of each month when the period is set on a monthly basis.

For this purpose, the microcomputer 2110 reads out settlement table I shown in FIG. 24 (a) from the external storage 2105 to the memory 2103, and then extracts the total number of the issued lots. Namely, first the number of the issued lots is calculated on a shop-by-shop basis. Next, the allotment for each sheet of lot according to the issued number against the total amount of prizes is calculated based on the assumption that a sheet of lot is issued per a prefixed purchase amount determined among the shops concerned. For example, assuming the total amount of prizes is Yen 10,000,000 and the final number of lots issued totally is 20,000 sheets, then the calculated cost per sheet becomes Yen 500. Further, the amount to be borne by each shop is obtained by multiplying this cost per sheet by the number of lots issued by each shop being stored in settlement table I.

Next, as for betting tickets, the amount to be borne for each bet is assumed to be a fixed value. The amount to be borne by each shop in regard to the betting tickets is calculated by multiplying the above fixed value by the number of bets for each shop. The amount to be borne against the betting tickets added by the amount to be borne against the lots results in the total amount to be borne by the shop concerned. For example, as shown in settlement table I of FIG. 24 (a), the amount to be borne by "xx store" becomes Yen 35,500 in total (= 55 sheets x 500 Yen + 80 bets x 100 Yen), assuming the amount to be borne for a sheet of lot is Yen 500 and the amount to be borne for a sheet of betting ticket is Yen 100.

The above calculation is made for each shop, and is stored shop by shop into the memory 2103 shown in FIG. 20. On completion of this processing, the amount to be borne by each shop is printed out on a shop-by-shop basis in the next step S1904. Namely, the amount to be borne being stored in the memory 2103 is printed out using the printer 2104.

Next, in step S1905, the lots and betting tickets issued by each shop is printed out on a shop-by-shop basis. Here, print information is the information related to each ticket, excluding the electronic signature.

On completion of printing the amount to be borne, the process proceeds to step S1906. Step S1906 calculates the amount having already been paid by each shop because service is already provided to customers. The microcomputer 2110 reads out the settlement table II shown in FIG. 24 (b) from the external storage 2105 into the memory 2103. Thereafter the total amount to be refunded to each shop is calculated. Namely, the amount paid is calculated by summing the refund amount of both the lots and the betting tickets respectively stored in the settlement table II of FIG. 24 (b).

This calculation is performed shop by shop and is expanded to the memory 2103 shown in FIG. 20, and then step S1906 is completed.

Next, in step S1907, the list of payment paid is printed out on a shop-by-shop basis. For this purpose, the calculation result stored in the memory 2103 is forwarded to the printer 2104 to print out.

Further, in step S1908, the microcomputer 2110 prints out the logging information, or the winning ticket information, stored in the settlement tables I, II having been expanded in the memory 2103. In this printout information, the electronic signature is excluded.

On completion of printing out the entire winning ticket information, in the next step S1909, the final settlement for each shop is performed. Namely, the settlement amount for the period concerned is obtained by subtracting the amount (b) having been paid from the amount (a) to be borne by each shop, respectively stored in the memory 2103.

For instance, in the previous example, assuming that the total amount (b) paid by "xx store" is ¥100,000 and the amount (a) to be borne is ¥35,500, then the balance ¥64,500 is to be paid to "xx store" as the adjusted balance thereto. Step S1909 performs the calculation for the entire shops.

Next, in step S1910, the adjusted balance is printed out on a shop-by-shop basis.

On completion of printout processing of the adjusted balance, the process proceeds to step S1911, in which the information of each settlement table I, II stored in the external storage 2105 shown in FIG. 20 is updated. Namely, in regard to the logging information on the collected tickets stored in the area 2044 shown in FIG. 24 (b), the stored information is updated by adding the information denoting the completion of settlement, while the totaling areas 2012, 2013 shown in FIGS. 24 (a), (b) on a shop-by-shop basis are cleared by zero. In regard to the issued ticket information stored in the area 2011 shown in FIG. 24 (a), the information denoting the completion of settlement is added to store again. In such a manner the information in settlement tables I, II stored in the external storage 2105 is entirely updated.

From the adjusted balance for each shop being printed out in the totaling equipment 2100, the manager produces a bill for each shop by manual or other means, so as to provide for the actual settlement procedure. On completion of updating the table data, the process returns to processing selection input step S1902 shown in FIG. 23.

### (2) Coupon ticket settlement

In processing selection/input step S1902 shown in FIG. 23, when settlement processing of coupon ticket is specified, the process proceeds to step S1920.

This step S1920 is provided for data classification and settlement. In this step, there is performed processing of producing document to be sent to the manufacturers of the commodities, and document to be sent to the shops. The totaling contents for respective manufacturers are exactly the same as the contents of the settlement table III shown in FIG. 24 (c). Next, the coupon tickets and the amount thereof for respective shops are calculated. Namely, the information concerned for each shop is read out from the area for the shop concerned in the totaling table III and the amount to be paid to each shop is sum up. On completion of this processing, the process proceeds to the next step S1921.

Step S1921 is a step for printing out on separate pages on a manufacturer-by-manufacturer basis. Namely, the area corresponding to each manufacturer in the settlement table III shown in FIG. 24 (c) is read out, and then the total amount paid and the amount to be paid to each shop are calculated and is printed out. At the same time the number of the used coupon tickets on a commodity code basis and the logging information of each coupon ticket are printed out. In this printout, the electronic signatures are also printed.

Here, in this printout processing, it is possible to store shop identification information such as the number of transfer account, the account name, the contact destination, etc. for each shop in the external storage device 2105, and print out these identification information in addition to the amount to be paid to each shop. This facilitates payment procedure from the manufacturer side.

On completion of printing out for each manufacturer, the process proceeds to the next step S1922. In step S1922, the settled amount is printed out for each manufacturer on separate pages. Further, the coupon tickets stored as the logging information are printed out without printing the electronic signatures. On completion of this processing, the microcomputer 2110 updates each area in the settlement table III of the external storage 2105 to a cleared condition, in a similar manner to clear the settlement table III. Thus the table contents are restored to the initial conditions and accordingly the processing is completed.

On completion of these steps, the process returns to processing selection step S1902. Thereafter, when the operator designates to complete the processing, the process returns to processing selection/input step S1701 shown in FIG. 21, enabling to select next process.

As the present invention has been described, according to the totaling equipment of the present invention, it becomes possible to sort and output settlement information on each shop and manufacturer basis. Also it becomes possible to output settlement information automatically by reading out the contents of a store IC card.

Moreover, collected tickets as well as issued tickets are listed so as to use this logged information at a later date for investigating when there occurs a problem of suspected illegality.

Additionally, it may also be possible to add the aforementioned shop settlement amount to electronic cash in store IC card 3, to realize electronic settlement for the shop.

The embodiments of the present invention have been explained in the above description. Further, the following modification may be possible:
(1) In the above description, the IC card conforming to ISO standard or the like has been used. However, any other IC card is also applicable as long as a portable IC card provided with a processor and a memory is used.
(2) Service tickets have been explained taking the example of lotteries, betting tickets and coupon tickets. Any other service tickets for providing other services are applicable.
(3) The POS terminal has been explained as electronic wallet transaction equipment. However, other equipment for electronic wallet transaction is also applicable.
(4) Discount service has been explained as a type of the service to be provided. Any other service including the offer of gift token, etc. are applicable.

Accordingly, the foregoing description of the embodiments is not intended to limit the invention to the particular details of the examples illustrated. Any suitable modification and equivalents may be resorted to the scope of the invention. All features and advantages of the invention which fall within the scope of the invention are covered by the appended claims.

### INDUSTRIAL APPLICABILITY

As the present invention has been described, the present invention is beneficial for a customer service system to be added to an electronic wallet transaction system.

In particular, as a service ticket is transferable between an IC card and equipment or between IC cards, it is possible to circulate in a similar manner to a service ticket formed of piece of paper. Thus a service function beneficial to a customer can be provided. Further, issue management as well as collection and settlement become easy.

In addition, because electronic wallet transaction equipment performs issuing and collection of service tickets automatically, lord job can be avoided even on the electronic wallet transaction equipment side. Furthermore, automatic issue and collection can protect from illegal conduct even when a service ticket is constituted in a transferable manner.

## Claims

1. An electronic wallet transaction apparatus connected to an IC card (2) having a memory and for performing electronic wallet transaction, comprising:
a card reader/writer (4) for exchanging information with said IC card; and
a processing means (5) for performing said electronic wallet transaction in cooperation with said IC card,
wherein said processing means has:
a function for issuing service information for receiving a desired service and transferring to said IC card; and
a function for extracting service information of a provided service object among said service information stored in said memory of said IC card and for collecting the service information.

2. The electronic wallet transaction apparatus according to claim 1 wherein said processing means (5) issues said service information in connection with said electronic wallet transaction.

3. The electronic wallet transaction apparatus according to claim 1 wherein said processing means (5) reflects in said electronic wallet transaction the service related to said extracted service information.

4. The electronic wallet transaction apparatus according to claim 3 wherein said processing means (5) extracts said service information from said IC card (2) and performs discount processing to a purchase amount of said electronic wallet transaction.

5. The electronic wallet transaction apparatus according to claim 1 wherein said processing means further comprises:
a second IC card (3) for collecting said service information; and
a second reader/writer for exchanging information with said second IC card.

6. The electronic wallet transaction apparatus according to claim 5 wherein said second IC card (3) has a function for exchanging information with said IC card (2) and for performing electronic cash transfer and said service information transfer,
and said processing means (5) comprises a control means for ordering said second IC card to perform said electronic cash transfer and said service information transfer between said IC card and said second IC card when performing said electronic wallet transaction using said IC card.

7. An IC card (2) exchanging information with electronic wallet transaction apparatus performing an electronic wallet transaction, comprising:
a processor (33); and
a nonvolatile rewritable memory (35),
wherein said processor has:
an electronic wallet transaction function for performing said electronic wallet transaction; and
a service information management function for storing into said memory said service information provided from said electronic wallet transaction apparatus, and for transferring said service information stored into said memory to said electronic wallet transaction apparatus.

8. The IC card according to claim 7 wherein said processor (33) further has an access determination function for determining whether an access from an external equipment is an access of an equipment permitted a transfer of said service information stored in said memory and for permitting said transfer based on said determination.

9. An IC card indicator cooperating with the IC card according to claim 7, comprising:
a display unit; and
a controller for extracting said service information stored in said memory of said IC card and displaying onto said display unit.

10. An IC card connection apparatus (7) for communicating information between a first customer IC card (2) and a second customer IC card (3), comprising:
an order input means for ordering to transfer service information stored in said first customer IC card;
a transfer controller for transferring said service information in said first customer IC card to said second customer IC card based on said order from said order input means.

11. An IC card transaction system comprising:
an IC card (2) having a memory; and
an electronic wallet transaction apparatus (1) for performing electronic wallet transaction in cooperation with said IC card,
wherein said electronic wallet transaction apparatus (1) has:
a function for issuing service information to receive a desired service and for transferring to said IC card; and
a function for extracting and collecting service information on a provided service object among said service information stored in memory of said IC card.

12. The IC card transaction system according to claim 11 wherein said electronic wallet transaction apparatus (1) reflects in said electronic wallet transaction the service related to said extracted service information.

13. The IC card transaction system according to claim 12 wherein said electronic wallet transaction apparatus (1) extracts said service information from said IC card (2) and performs discount processing to a purchase amount of said electronic wallet transaction.

14. The IC card transaction system according to claim 11 wherein said electronic wallet transaction apparatus further comprises:
a second IC card (3) for collecting said service information; and
a second reader/writer for exchanging information with said second IC card.

15. The IC card transaction system according to claim 14 wherein said second IC card has a function of exchanging information with said IC card and of performing electronic cash transfer and said service information transfer.

16. The IC card transaction system according to claim 14, further comprising:
a settlement apparatus (9) for reading out said service information stored in said second IC card (3) and for classifying and settling said service information.

17. The IC card transaction system according to claim 11, further comprising:
IC card connection apparatus (7) for transferring said service information between said first customer IC card and said second customer IC card.
